# EUROPEAN PATENT APPLICATION

(11) **EP 4 583 391 A1**
(43) Date of publication of application: **09.07.2025**
(21) Application number: 23860104.1
(22) Date of filing: 21.08.2023
(51) Int. Cl.: H02M 7/48, B64D 33/08, H02K 9/19

(54) **DRIVE DEVICE**

(30) Priority: 01.09.2022 JP 2022139554
(71) Applicant: DENSO CORPORATION, Kariya-city, Aichi 448-8661 (JP)
(72) Inventor: NAGAI, Shohei, Kariya- city, Aichi 4488661 (JP); HAYASHI, Jiro, Kariya- city, Aichi 4488661 (JP)
(74) Representative: TBK
(86) International application number: PCT/JP2023/029967
(87) International publication number: WO 2024/048341

(57) **Abstract**

An EPU (50) includes a motor device (60), an inverter device (80), a unit housing (101), and a cooling device (800). The motor device (60) includes a motor (61) and a motor housing (70). The inverter device (80) includes an inverter (81) and an inverter housing (90). The motor (61) and the inverter (81) are accommodated in the unit housing (101). The cooling device (800) includes a refrigerant passage (810) and a refrigerant pump (801). The refrigerant pump (801) causes a refrigerant (RF) to flow so as to circulate through the refrigerant passage (810). The refrigerant (RF) flowing through the refrigerant passage (810) cools both the motor device (60) and the inverter device (80).

## Description

### CROSS REFERENCE TO RELATED APPLICATION

The present application is based on Japanese Patent Application No. 2022-139554 filed on September 01, 2022. The entire disclosures of all of the above applications are incorporated herein by reference.

### TECHNICAL FIELD

The present disclosure relates to a drive device.

### BACKGROUND ART

Patent Literature 1 discloses a drive device that drives an aircraft to fly. The drive device includes a motor, an inverter, and a case. The motor and the inverter are accommodated in the case. In the drive device, air or liquid is used to cool the motor and the inverter. Patent Literature 1 describes a configuration in which replacement work of the drive device in the aircraft is facilitated.

### PRIOR ART LITERATURE

### PATENT LITERATURE

PATENT LITERATURE 1: US2021/0276707

### SUMMARY OF INVENTION

However, in Patent Literature 1, an output density of the drive device may decrease due to the configuration in which the replacement work of the drive device is facilitated. The output density is, for example, an output per unit mass.

An object of the present disclosure is to provide a drive device capable of improving an output density.

Multiple aspects disclosed in the description adopt different technical means to achieve respective objects. Reference numerals in parentheses in the claims and the section are an example indicating a correspondence relationship with specific means described in an embodiment to be described later as one aspect, and do not limit the technical scope.

In order to achieve the above object, a disclosed aspect is a drive device that is to be driven by electric power. The drive device comprises: a motor device including a motor configured to be supplied with electric power; an inverter device including an inverter configured to convert the electric power to be supplied to the motor; an accommodating housing accommodating the motor and the inverter; and a cooling device including a refrigerant passage, which is configured to allow a refrigerant to circulate therethrough, and a refrigerant pump, which is configured to cause the refrigerant to flow through the refrigerant passage. The cooling device is configured to cool both the motor device and the inverter device with the refrigerant which flows through the refrigerant passage.

According to the above aspect, both the motor device and the inverter device are cooled by the refrigerant circulating through the refrigerant passage. In the configuration, both an increase in a temperature of the motor device and an increase in a temperature of the inverter device can be reduced by the refrigerant. Therefore, in each of the motor device and the inverter device, a decrease in output such as a current due to the increase in the temperature is less likely to occur. Accordingly, an output density of the drive device can be improved.

### BRIEF DESCRIPTION OF THE DRAWINGS

FIG. 1 is a vertical cross-sectional view of an EPU according to a first embodiment.
FIG. 2 is a schematic vertical cross-sectional view of the EPU.
FIG. 3 is a horizontal cross-sectional view of an inverter device.
FIG. 4 is a schematic horizontal cross-sectional view of a motor device.
FIG. 5 is a diagram showing a configuration of an eVTOL.
FIG. 6 is a diagram showing an electrical configuration of a driving system.
FIG. 7 is a schematic vertical cross-sectional view of the EPU according to a second embodiment.
FIG. 8 is a schematic vertical cross-sectional view of the EPU according to a third embodiment.
FIG. 9 is a schematic vertical cross-sectional view of the EPU according to a fourth embodiment.
FIG. 10 is a schematic vertical cross-sectional view of the EPU according to a fifth embodiment.
FIG. 11 is a schematic vertical cross-sectional view of the EPU according to a sixth embodiment.
FIG. 12 is a schematic vertical cross-sectional view of the EPU according to a seventh embodiment.
FIG. 13 is a schematic vertical cross-sectional view of the EPU according to an eighth embodiment.
FIG. 14 is a schematic vertical cross-sectional view of the EPU according to a ninth embodiment.
FIG. 15 is a schematic horizontal cross-sectional view of the EPU.
FIG. 16 is a schematic horizontal cross-sectional view of the EPU according to a tenth embodiment.
FIG. 17 is a schematic vertical cross-sectional view of the EPU according to an eleventh embodiment.
FIG. 18 is a schematic horizontal cross-sectional view of the EPU.
FIG. 19 is a schematic vertical cross-sectional view of the EPU according to a twelfth embodiment.
FIG. 20 is a horizontal cross-sectional view of the inverter device.
FIG. 21 is a schematic vertical cross-sectional view of the EPU according to a thirteenth embodiment.
FIG. 22 is a horizontal cross-sectional view of the inverter device.
FIG. 23 is a schematic vertical cross-sectional view of the EPU according to a fourteenth embodiment.
FIG. 24 is a schematic vertical cross-sectional view of the EPU.
FIG. 25 is a horizontal cross-sectional view of the inverter device according to a fifteenth embodiment.

### DESCRIPTION OF EMBODIMENTS

Hereinafter, multiple aspects for implementing the present disclosure will be described with reference to the drawings. In each embodiment, the same reference numerals are assigned to portions corresponding to the items described in the preceding embodiments, and a repetitive description thereof may be omitted. In each embodiment, when only a part of the configuration is described, another embodiment previously described can be employed for the other part of the configuration. Not only portions which are specifically clarified so as to be combined in each embodiment are capable of being combined, but also embodiments are capable of being partially combined with each other even though combination is not clarified as long as no adverse effect is particularly generated with respect to the combination.

### <First Embodiment>

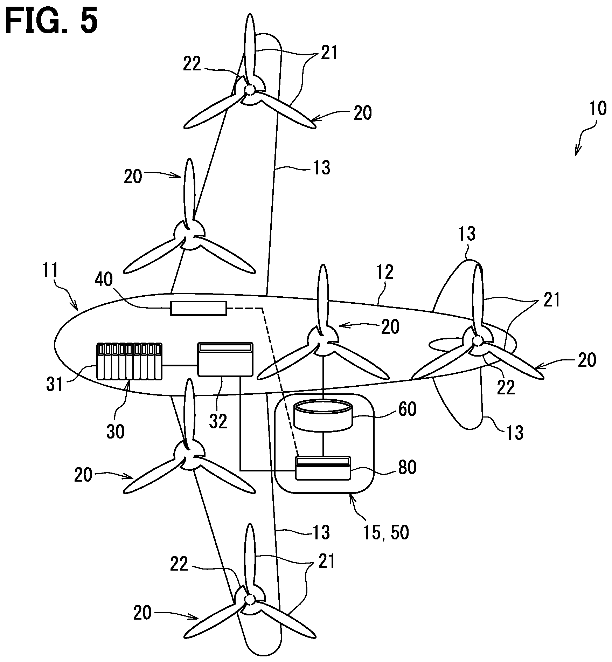

A driving system 30 shown in FIG. 5 is mounted on an eVTOL 10. The eVTOL 10 is an electric vertical take-off and landing aircraft, and can take off and land in a vertical direction. The eVTOL is an abbreviation of an electric vertical take-off and landing aircraft. The eVTOL 10 is an aircraft flying in the atmosphere and corresponds to a flight vehicle. The eVTOL 10 is also an electric-type electric aircraft and may be referred to as an electric flight vehicle. The eVTOL 10 is a manned aircraft carrying occupants. The driving system 30 is a system that drives the eVTOL 10 to fly.

The eVTOL 10 includes an airframe 11 and propellers 20. The airframe 11 includes an airframe main body 12 and wings 13. The airframe main body 12 is a body of the airframe 11 and has, for example, a shape extending in a front-rear direction. The airframe main body 12 has a passenger compartment for carrying occupants. Each of the wings 13 extends from the airframe main body 12 and multiple wings 13 are provided on the airframe main body 12. The wings 13 are fixed wings. The multiple wings 13 include main wings, tail wings, and the like.

Multiple propellers 20 are provided on the airframe 11. The eVTOL 10 is a multi-transponder including at least three propellers 20. For example, at least four propellers 20 are provided on the airframe 11. The propellers 20 are provided on the airframe main body 12 and the wings 13. Each of the propellers 20 rotates around a propeller axis. The propeller axis is, for example, a center line of the propeller 20. The propeller 20 can generate thrust and lift in the eVTOL 10. The propeller 20 may be referred to as a rotor or a rotary blade.

The propeller 20 includes blades 21 and a boss 22. The blades 21 are arranged in a circumferential direction of the propeller axis. The boss 22 couples the multiple blades 21. Each of the blades 21 extends from the boss 22 in a radial direction of the propeller axis. The propeller 20 includes a propeller shaft (not shown). The propeller shaft is a rotating shaft of the propeller 20 and extends along the propeller axis from the boss 22. The propeller shaft may be referred to as a propeller shaft.

The eVTOL 10 is a tilt-rotor aircraft. In the eVTOL 10, the propeller 20 can be tilted. That is, a tilt angle of the propeller 20 is adjustable. For example, when the eVTOL 10 ascends, an orientation of the propeller 20 is set such that the propeller axis extends in an upper-lower direction. In this case, the propeller 20 functions as a lift-rotor for generating lift in the eVTOL 10. The propeller 20 functions as a lift-rotor, enabling the eVTOL 10 to hover and take off and land vertically. When the eVTOL 10 moves forward, the orientation of the propeller 20 is set such that the propeller axis extends in a front-rear direction. In this case, the propeller 20 functions as a cruise-rotor for generating thrust in the eVTOL 10.

The eVTOL 10 includes a battery 31, a distributor 32, a flight control device 40, and EPUs 50. The battery 31, the distributor 32, the flight control device 40, and the EPU 50 are included in the driving system 30. The battery 31 is electrically connected to the multiple EPUs 50. The battery 31 is a power supplying unit that supplies electric power to the EPUs 50, and corresponds to a power supply unit. The battery 31 is a DC voltage source that applies a DC voltage to the EPUs 50. The battery 31 has a rechargeable secondary battery. The battery 31 also supplies electric power to the flight control device 40. In addition to or instead of the battery 31, a fuel cell, a generator, or the like may be used as the power supply unit.

The distributor 32 is electrically connected to the battery 31 and the multiple EPUs 50. The distributor 32 distributes the electric power from the battery 31 to the multiple EPUs 50. The electric power distributed to the EPUs 50 by the distributor 32 is drive power for driving the EPUs 50.

The flight control device 40 controls the driving system 30. The flight control device 40 performs flight control for causing the eVTOL 10 to fly. The flight control device 40 is communicably connected to the multiple EPUs 50. The flight control device 40 individually controls the multiple EPUs 50. The flight control device 40 controls the EPUs 50 via a control circuit 160 to be described later. The flight control device 40 controls the control circuit 160.

Each of the EPUs 50 is a device for driving the propeller 20 to rotate, and corresponds to a drive device. The EPU is an abbreviation of an electric propulsion unit. The EPU 50 may be referred to as a power drive device or a power drive system. The EPU 50 is provided individually for each of the multiple propellers 20. The EPU 50 is arranged on the propeller 20 along the propeller axis. All of the multiple EPUs 50 are fixed on the airframe 11. The EPU 50 rotatably supports the propeller 20. The EPU 50 is connected to the propeller 20. The propeller 20 is fixed to the airframe 11 with the EPU 50 interposed therebetween. When the tilt angle of the propeller 20 is changed, an angle of the EPU 50 is also changed.

The eVTOL 10 includes a propulsion device 15. The propulsion device 15 is a device for propelling the eVTOL 10. The eVTOL 10 can fly, such as lift, by propulsion of the propulsion device 15. The propulsion device 15 includes the propeller 20 and the EPU 50. In the propulsion device 15, the propeller 20 rotates as the EPU 50 is driven. The propeller 20 corresponds to a rotary body. The eVTOL 10 flies by rotating the propellers 20. That is, the eVTOL 10 moves by rotating the propellers 20. The eVTOL 10 corresponds to a moving object.

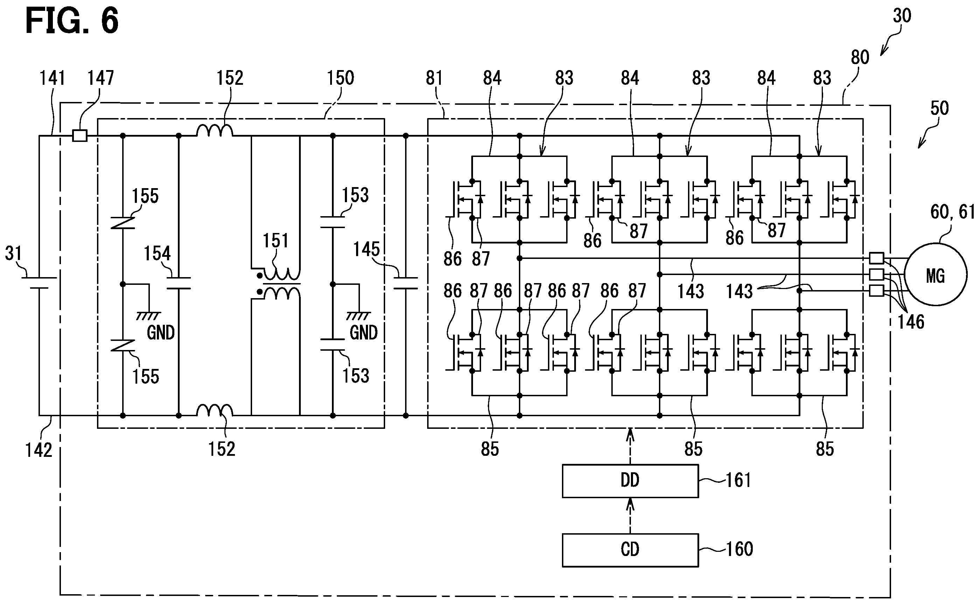

As shown in FIGS. 5 and 6, the EPU 50 includes a motor device 60 and an inverter device 80. For example, the EPU 50 includes one motor device 60 and one inverter device 80. The motor device 60 includes a motor 61. The inverter device 80 includes an inverter 81. The motor 61 is electrically connected to the battery 31 via the inverter 81. The motor 61 is driven in response to the electric power supplied from the battery 31 via the inverter 81.

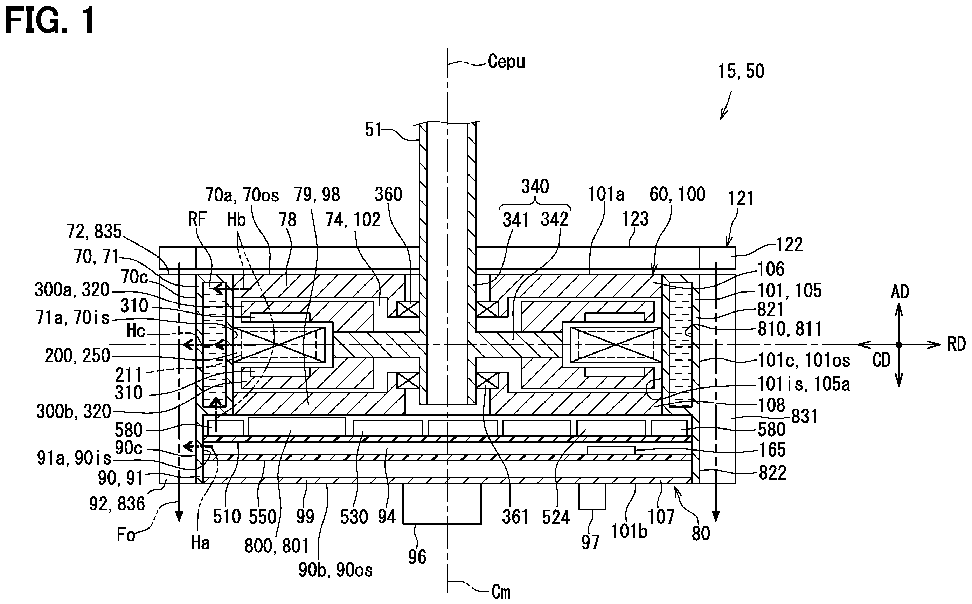

The motor 61 is a multi-phase AC motor. The motor 61 is, for example, a three-phase AC motor, and has a U-phase, a V-phase, and a W-phase. The motor 61 is a moving driving source for moving the moving object, and functions as an electric motor. As the motor 61, for example, a brushless motor is used. The motor 61 functions as a generator during regeneration. The motor 61 includes motor coils 211 of multiple phases (see FIG. 1). Each of the motor coils 211 is a winding and forms an armature. The motor coils 211 are provided respectively for the U-phase, the V-phase, and the W-phase. The motor 61 corresponds to a rotary electric machine, and the EPU 50 corresponds to a rotary electric machine unit.

In FIG. 6, the inverter 81 drives the motor 61 by converting the electric power to be supplied to the motor 61. The inverter 81 converts the electric power supplied to the motor 61 from a direct current to an alternating current. The inverter 81 is a power conversion unit that converts the electric power. The inverter 81 is a multi-phase power conversion unit, and performs power conversion for each of the multiple phases. The inverter 81 is, for example, a three-phase inverter, and performs power conversion for each of the U-phase, the V-phase, and the W-phase. The inverter device 80 may be referred to as a power conversion device.

The inverter device 80 includes a P-line 141 and an N-line 142. The P-line 141 and the N-line 142 electrically connect the battery 31 and the inverter 81. The P-line 141 is electrically connected to a positive electrode of the battery 31. The N-line 142 is electrically connected to a negative electrode of the battery 31. In the battery 31, the positive electrode is an electrode on a high potential side, and the negative electrode is an electrode on a low potential side. The P-line 141 and the N-line 142 are power lines for supplying electric power. The P-line 141 is a power line on the high potential side and may be referred to as a high potential line. The N-line 142 is a power line on the low potential side and may be referred to as a low potential line.

The EPU 50 includes output lines 143. Each of the output lines 143 is a power line for supplying electric power to the motor 61. The output lines 143 electrically connect the motor 61 and the inverter 81. The output line 143 spans the motor device 60 and the inverter device 80.

The inverter device 80 includes smoothing capacitors 145 and an EMI filter 150. Each of the smoothing capacitors 145 is a capacitor that smooths the DC voltage supplied from the battery 31. The smoothing capacitor 145 is connected to the P-line 141 and the N-line 142 between the battery 31 and the inverter 81. The smoothing capacitor 145 is connected in parallel to the inverter 81.

The EMI filter 150 is a filter circuit that reduces electromagnetic noise. The EMI filter 150 is connected to the P-line 141 and the N-line 142 between the battery 31 and the inverter 81. The EMI filter 150 is, for example, connected in parallel to the smoothing capacitor 145 and the inverter 81.

The EMI filter 150 includes common-mode coils 151, normal-mode coils 152, Y capacitors 153, X capacitors 154, and varistors 155. Each of the common-mode coils 151 is a common-mode choke coil and can reduce common-mode noise. Each of the normal-mode coils 152 is a normal-mode choke coil and can reduce normal-mode noise. Each of the Y capacitors 153 is a line bypass capacitor and can reduce the common-mode noise. Each of the X capacitors 154 is an across-the-line capacitor and can reduce the normal-mode noise. Each of the varistors 155 can absorb a surge voltage and reduce the surge voltage. The Y capacitors 153 and the varistors 155 are grounded to a ground GND.

The inverter 81 is a power conversion circuit, for example, a DC-AC conversion circuit. The inverter 81 includes upper and lower arm circuits 83 corresponding to the multiple phases. For example, the inverter 81 includes the upper and lower arm circuits 83 respectively for the U-phase, the V-phase, and the W-phase. Each of the upper and lower arm circuits 83 may be referred to as a leg or arm circuit. Each of the upper and lower arm circuits 83 includes an upper arm 84 and a lower arm 85. The upper arm 84 and the lower arm 85 are connected in series to the battery 31. The upper arm 84 is connected to the P-line 141, and the lower arm 85 is connected to the N-line 142.

The output line 143 is connected to the upper and lower arm circuit 83 for each of the multiple phases. The output line 143 is connected between the upper arm 84 and the lower arm 85. The output line 143 connects the upper and lower arm circuit 83 and the coil for each of the multiple phases. The output line 143 is connected to the coil on a side opposite to a neutral point.

Each of the upper arm 84 and the lower arm 85 includes arm switches 86 and diodes 87. Each of the arm switches 86 is, for example, a transistor such as an MOSFET. The MOSFET is an abbreviation of a metal-oxide-semiconductor field-effect transistor. The arm switch 86 is a switching element, and can convert power by switching. The switch element may be a semi-conductor element such as a power element. The arm switch 86 is a conversion switch for converting electric power.

In the upper arm 84, a drain of the arm switch 86 is connected to the P-line 141. In the lower arm 85, a source of the arm switch 86 is connected to the N-line 142. The source of the arm switch 86 in the upper arm 84 and the drain of the arm switch 86 in the lower arm 85 are connected to each other. In each of the upper arm 84 and the lower arm 85, each of the diodes 87 is connected in antiparallel to the arm switch 86 for reflux. An anode of the diode 87 is connected to the source of the corresponding arm switch 86, and a cathode of the diode 87 is connected to the drain of the arm switch 86. The arm switch 86 may be referred to as a semiconductor switch.

Each of the upper arm 84 and the lower arm 85 includes multiple arm switches 86 and multiple diodes 87. In each of the upper arm 84 and the lower arm 85, the multiple arm switches 86 are connected in parallel, and the multiple diodes 87 are connected in parallel. In the arms 84, 85, multiple sets are connected in parallel with one arm switch 86 and one diode 87 as one set. For example, in each of the upper arm 84 and the lower arm 85, six arm switches 86 and six diodes 87 are connected in parallel.

The EPU 50 includes the control circuit 160 and a drive circuit 161. The control circuit 160 and the drive circuit 161 are included in the inverter device 80. The control circuit 160 controls driving of the inverter 81. The control circuit 160 controls driving of the motor 61 via the inverter 81. The control circuit 160 may be referred to as a motor control unit. In FIG. 6, the control circuit 160 is illustrated as CD, the drive circuit 161 is illustrated as DD, and the motor 61 is illustrated as MG.

The control circuit 160 is a control device such as an ECU. The ECU is an abbreviation of an electronic control unit. The control circuit 160 is mainly implemented by a microcomputer including, for example, a processor, a memory, an I/O, and a bus connecting these components. The memory is a non-transitory tangible storage medium that non-temporarily stores computer readable programs and data. The non-transitory tangible storage medium is a non-transitory tangible storage medium, and is implemented by a semi-conductor memory, a magnetic disk, or the like.

The control circuit 160 executes various types of processing related to the driving of the inverter 81 by executing the control programs stored in the memory. The control circuit 160 is electrically connected to an external device, the inverter 81, and various sensors. The external device is, for example, a host ECU such as an integrated ECU mounted on a moving object. The various sensors are provided in, for example, the EPU 50. The control circuit 160 controls the inverter 81 by outputting a command signal to the inverter 81. The control circuit 160 generates the command signal in response to a control signal received from the external device, detection signals received from the various sensors, and the like. The control circuit 160 controls the inverter 81 via the drive circuit 161. The control circuit 160 causes the inverter 81 to perform power conversion.

The drive circuit 161 is electrically connected to each of the arm switches 86 in the inverter 81. The drive circuit 161 drives the inverter 81 in response to the command signal from the control circuit 160. The drive circuit 161 drives the arm switch 86 by applying a drive voltage corresponding to the command signal to a gate of the arm switch 86. The drive circuit 161 is capable of turning on and off the arm switch 86. The drive circuit 161 may be referred to as a driver.

The inverter device 80 includes motor current sensors 146 and a battery current sensor 147. The motor current sensors 146 detect a current flowing through the motor 61. The motor current sensors 146 are provided for the output lines 143. The motor current sensors 146 detect the current flowing through the motor 61 via the output lines 143. The motor current sensors 146 are provided respectively for the U-phase, the V-phase, and the W-phase, for example. Each of the motor current sensors 146 is electrically connected to the control circuit 160 and outputs a detection signal to the control circuit 160.

The battery current sensor 147 detects a current flowing through the battery 31. The battery current sensor 147 is provided for the P-line 141. The battery current sensor 147 detects a current flowing from the battery 31 to the inverter 81 via the P-line 141. The battery current sensor 147 is electrically connected to the control circuit 160 and outputs a detection signal to the control circuit 160.

As shown in FIG. 1, the EPU 50 includes an EPU shaft 51. The EPU shaft 51 connects the motor 61 and the propeller 20. The EPU shaft 51 rotates together with the propeller 20 as the motor 61 is driven. The EPU shaft 51 rotates around an EPU axis Cepu. The EPU axis Cepu is a center line of the EPU shaft 51. The EPU axis Cepu coincides with the propeller axis.

In the propulsion device 15, the propeller 20 and the EPU 50 are arranged along the EPU axis Cepu. In the propulsion device 15, propeller wind is generated as the propeller 20 rotates. The propeller wind is gas such as air flowing from the propeller 20 toward the EPU 50 along the EPU axis Cepu. The propeller wind corresponds to a rotation wind. The EPU 50 is located on a downwind side of the propeller wind with respect to the propeller 20.

In the EPU 50, the motor device 60 and the inverter device 80 are arranged in an axial direction AD along the motor axis Cm. The motor device 60 is located on an upwind side of the propeller wind with respect to the inverter device 80. The motor device 60 is provided between the propeller 20 and the inverter device 80 in the axial direction AD. The motor axis Cm is a center line of the motor 61 and is a virtual line extending linearly. The motor axis Cm corresponds to a rotation axis. The axial direction AD is a direction in which the motor axis Cm extends.

Regarding the motor axis Cm, the axial direction AD, a radial direction RD and a circumferential direction CD are orthogonal to one another. The circumferential direction CD is a rotation direction of the motor 61. Regarding the radial direction RD, an outer side may be referred to as a radially outer side or an outer peripheral side, and an inner side may be referred to as a radially inner side or an inner peripheral side. The motor axis Cm coincides with the EPU axis Cepu. The motor axis Cm may be located at a position deviated from the EPU axis Cepu in the radial direction RD. FIG. 1 illustrates a vertical cross-section of the EPU 50 taken along the motor axis Cm.

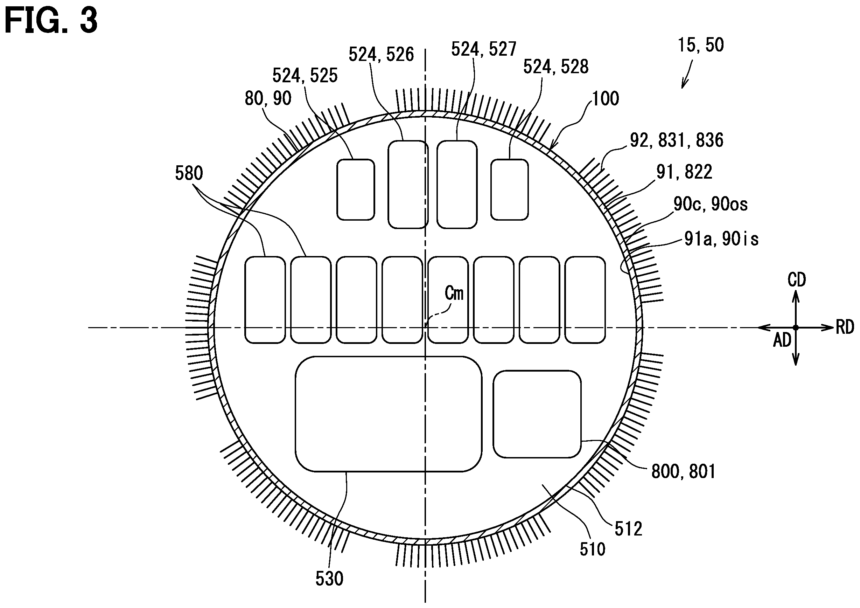

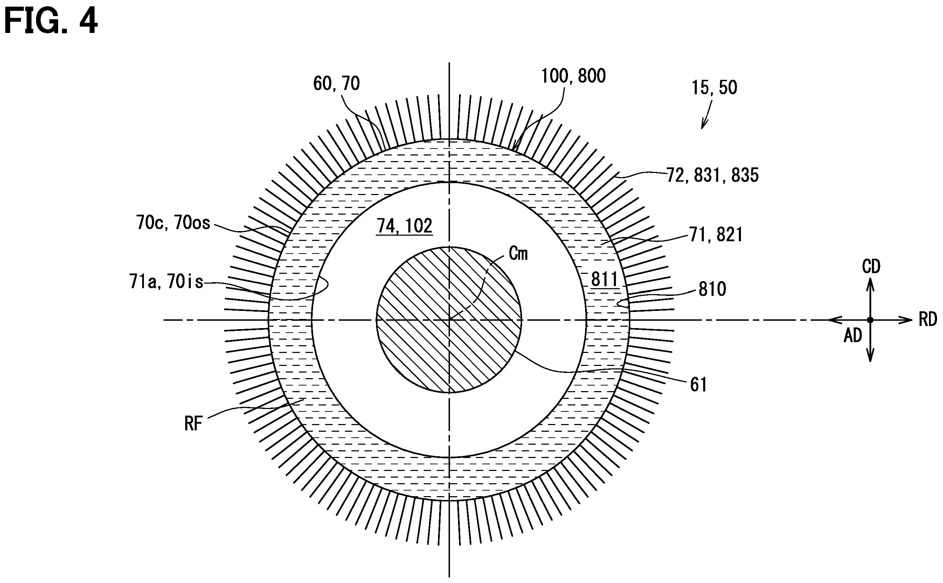

The EPU 50 includes a motor unit 100. The motor unit 100 includes the motor device 60 and the inverter device 80. In the motor unit 100, the motor device 60 and the inverter device 80 are integrally unitized. FIG. 3 illustrates a cross-section of the inverter device 80 taken perpendicular to the motor axis Cm. FIG. 4 illustrates a horizontal cross-section of the motor device 60 taken in a direction orthogonal to the motor axis Cm.

The motor unit 100 includes a unit housing 101. The unit housing 101 accommodates the motor 61 and the inverter 81. The unit housing 101 is formed in a tubular shape as a whole and extends in the axial direction AD along the motor axis Cm. In the motor unit 100, the motor 61 and the inverter 81 are accommodated in the unit housing 101, and thus the motor device 60 and the inverter device 80 are integrated. The unit housing 101 corresponds to an accommodating housing.

The unit housing 101 has a unit outer surface 101os and a unit inner surface 101is. The unit outer surface 101os is an outer surface of the unit housing 101. The unit inner surface 101is is an inner surface of the unit housing 101. The unit outer surface 101os and the unit inner surface 101is are formed by a wall portion of the unit housing 101. The unit outer surface 101os corresponds to an accommodating housing outer surface.

The motor unit 100 has a unit upstream wall surface 101a, a unit downstream wall surface 101b, and a unit outer peripheral wall surface 101c. The wall surfaces 101a to 101c are included in the unit outer surface 101os. The unit upstream wall surface 101a and the unit downstream wall surface 101b extend in a direction orthogonal to the motor axis Cm. The unit upstream wall surface 101a faces upstream in terms of the propeller wind. The unit downstream wall surface 101b faces downstream in terms of the propeller wind. The unit outer peripheral wall surface 101c extends in a direction orthogonal to the radial direction RD. The propeller wind easily flows in the axial direction AD along the unit outer peripheral wall surface 101c.

The unit housing 101 includes a unit outer peripheral wall 105, an upstream plate 106, a downstream plate 107, and a partition plate 108. Each of the unit outer peripheral wall 105 and the plates 106 to 108 is made of a metal material or the like and has a thermal conduction property. The unit outer peripheral wall 105 forms the unit outer peripheral wall surface 101c. The unit outer peripheral wall 105 extends in an annular shape in the circumferential direction CD. The upstream plate 106 forms the unit upstream wall surface 101a. The downstream plate 107 forms the unit downstream wall surface 101b. Each of the upstream plate 106 and the downstream plate 107 extends in a plate shape in a direction orthogonal to the axial direction AD. The unit outer peripheral wall 105 spans the upstream plate 106 and the downstream plate 107.

The unit housing 101 has a unit space 102. The unit space 102 is an internal space of the unit housing 101. The partition plate 108 is provided inside the unit housing 101. The partition plate 108 extends in a direction orthogonal to the axial direction AD. The partition plate 108 partitions to divide the unit space 102 in the axial direction AD. The partition plate 108 is provided between the upstream plate 106 and the downstream plate 107. The partition plate 108 is located at a position away from both the upstream plate 106 and the downstream plate 107 in the axial direction AD.

The plates 106 to 108 are members independent of the unit outer peripheral wall 105. The plates 106 to 108 are fixed to the unit outer peripheral wall 105 by bolts, welding, or the like. That is, the plates 106 to 108 are attached to the unit outer peripheral wall 105 later. One among the plates 106 to 108 and the unit outer peripheral wall 105 may be integrally formed. For example, the partition plate 108 and the unit outer peripheral wall 105 may be integrally formed.

The unit housing 101 has a unit inner wall surface 105a. The unit inner wall surface 105a is included in an inner surface of the unit housing 101. The unit inner wall surface 105a is formed by the unit outer peripheral wall 105. Of the pair of wall surfaces of the unit outer peripheral wall 105, a wall surface facing the radially inner side is the unit inner wall surface 105a, and a wall surface facing the radially outer side is the unit outer peripheral wall surface 101c.

The motor device 60 includes a motor housing 70 in addition to the motor 61. The motor housing 70 accommodates the motor 61. The motor housing 70 has a motor space 74. The motor space 74 is an internal space of the motor housing 70. The motor space 74 is a space that accommodates the motor 61. The motor housing 70 has a motor outer peripheral wall 71. The motor outer peripheral wall 71 extends in an annular shape in the circumferential direction CD. The motor space 74 is a space on an inner side of the motor outer peripheral wall 71. The motor 61 is accommodated on an inner side of the motor outer peripheral wall 71.

The motor housing 70 includes a motor upstream wall 78 and a motor downstream wall 79. The motor upstream wall 78 and the motor downstream wall 79 extend in a direction orthogonal to the axial direction AD. The motor upstream wall 78 and the motor downstream wall 79 are arranged in the axial direction AD with the motor outer peripheral wall 71 interposed therebetween. The motor upstream wall 78 is provided on the upwind side of the propeller wind with respect to the motor downstream wall 79. The motor upstream wall 78 includes at least a part of the upstream plate 106. The motor downstream wall 79 includes at least a part of the partition plate 108.

The motor housing 70 has a motor housing outer surface 70os and a motor housing inner surface 70is. The motor housing outer surface 70os is an outer surface of the motor housing 70. The motor housing inner surface 70is is an inner surface of the motor housing 70. The motor housing outer surface 70os and the motor housing inner surface 70is are formed by the motor outer peripheral wall 71, the motor upstream wall 78, and the motor downstream wall 79.

The inverter device 80 includes an inverter housing 90 in addition to the inverter 81. The inverter housing 90 accommodates the inverter 81. The inverter housing 90 has an inverter space 94. The inverter space 94 is an internal space of the inverter housing 90. The inverter space 94 is a space that accommodates the inverter 81. The inverter housing 90 has an inverter outer peripheral wall 91. The inverter outer peripheral wall 91 extends in an annular shape in the circumferential direction CD. The inverter space 94 is a space on an inner side of the inverter outer peripheral wall 91. The inverter 81 is accommodated on an inner side of the inverter outer peripheral wall 91.

The inverter housing 90 includes an inverter upstream wall 98 and an inverter downstream wall 99. The inverter upstream wall 98 and the inverter downstream wall 99 extend in a direction orthogonal to the axial direction AD. The inverter upstream wall 98 and the inverter downstream wall 99 are arranged in the axial direction AD with the inverter outer peripheral wall 91 interposed therebetween. The inverter upstream wall 98 is provided on the upwind side of the propeller wind with respect to the inverter downstream wall 99. The inverter upstream wall 98 includes at least a part of the partition plate 108. The inverter downstream wall 99 includes at least a part of the downstream plate 107.

The inverter housing 90 has an inverter housing outer surface 90os and an inverter housing inner surface 90is. The inverter housing outer surface 90os is an outer surface of the inverter housing 90. The inverter housing inner surface 90is is an inner surface of the inverter housing 90. The inverter housing outer surface 90os and the inverter housing inner surface 90is are formed by the inverter outer peripheral wall 91, the inverter upstream wall 98, and the inverter downstream wall 99.

In the unit housing 101, the motor housing 70 and the inverter housing 90 are integrated. The motor housing 70 and the inverter housing 90 are included in the unit housing 101. For example, the motor outer peripheral wall 71 and the inverter outer peripheral wall 91 are included in the unit outer peripheral wall 105. The unit outer surface 101os includes the motor housing outer surface 70os and the inverter housing outer surface 90os. The unit inner surface 101is includes the motor housing inner surface 70is and the inverter housing inner surface 90is.

In the unit housing 101, the motor housing 70 and the inverter housing 90 are arranged in the axial direction AD. The inverter housing 90 is located on the downwind side of the propeller wind with respect to the motor housing 70. For example, in the unit outer peripheral wall 105, a portion on the upwind side is the motor housing 70, and a portion on the downwind side is the inverter housing 90.

In the unit housing 101, a portion forming the motor space 74 is the motor housing 70. For example, in the unit housing 101, the motor housing 70 is formed by the motor outer peripheral wall 71, the upstream plate 106, and the partition plate 108. The motor housing 70 has a motor upstream wall surface 70a, a motor outer peripheral wall surface 70c, and a motor inner wall surface 71a. The motor upstream wall surface 70a and the motor outer peripheral wall surface 70c are included in the motor housing outer surface 70os. The motor inner wall surface 71a is included in the motor housing inner surface 70is. The motor inner wall surface 71a is an inner wall surface of the motor housing 70.

The motor upstream wall surface 70a is included in the unit upstream wall surface 101a. The motor outer peripheral wall surface 70c is included in the unit outer peripheral wall surface 101c. The motor inner wall surface 71a is included in the unit inner wall surface 105a. The motor outer peripheral wall surface 70c and the motor inner wall surface 71a are formed by the motor outer peripheral wall 71.

In the unit housing 101, a portion forming the inverter space 94 is the inverter housing 90. For example, in the unit housing 101, the inverter housing 90 is formed by the inverter outer peripheral wall 91, the downstream plate 107, and the partition plate 108. The inverter housing 90 includes an inverter downstream wall surface 90b, an inverter outer peripheral wall surface 90c, and an inverter inner wall surface 91a. The inverter downstream wall surface 90b and the inverter outer peripheral wall surface 90c are included in the inverter housing outer surface 90os. The inverter inner wall surface 91a is included in the inverter housing inner surface 90is. The inverter inner wall surface 91a is an inner wall surface of the inverter housing 90.

The inverter downstream wall surface 90b is included in the unit downstream wall surface 101b. The inverter outer peripheral wall surface 90c is included in the unit outer peripheral wall surface 101c. The inverter inner wall surface 91a is included in the unit inner wall surface 105a. The inverter outer peripheral wall surface 90c and the inverter inner wall surface 91a are formed by the inverter outer peripheral wall 91. The inverter inner wall surface 91a corresponds to an inner wall surface.

The motor space 74 and the inverter space 94 are arranged in the axial direction AD. The partition plate 108 is located between the motor space 74 and the inverter space 94. The motor space 74 and the inverter space 94 are partitioned by the partition plate 108. The motor space 74 is a space between the upstream plate 106 and the partition plate 108. The inverter space 94 is a space between the downstream plate 107 and the partition plate 108.

The motor 61 includes a stator 200, a first rotor 300a, a second rotor 300b, and a motor shaft 340. The stator 200 is a stator. The stator 200 includes a motor coil 211 and a coil protection portion 250. The motor coil 211 extends in the circumferential direction CD along the motor inner wall surface 71a. The motor coil 211 is formed in an annular shape as a whole. The motor coil 211 corresponds to a coil.

The coil protection portion 250 protects the motor coil 211. The coil protection portion 250 is made of a resin material or the like. The coil protection portion 250 is fixed to the motor housing 70 while covering the motor coil 211. For example, the coil protection portion 250 is in close contact with the motor inner wall surface 71a. The coil protection portion 250 has a thermal conduction property. The coil protection portion 250 facilitates transferring heat from the motor coil 211 to the motor housing 70.

Each of the rotors 300a, 300b is a rotor. The rotors 300a, 300b rotate relative to the stator 200. The rotors 300a, 300b rotate about the motor axis Cm. The motor axis Cm is a center line of each of the rotors 300a, 300b. The stator 200 and the motor coil each extend in an annular shape in the circumferential direction CD. The center line of the stator 200 coincides with the motor axis Cm.

The motor device 60 is an axial gap-type rotary electric machine. The motor 61 is an axial gap-type motor. In the motor 61, the stator 200 and the rotors 300a, 300b are arranged in the axial direction AD along the motor axis Cm. The motor device 60 is a dual-rotor rotary electric machine. The motor 61 is a dual-rotor motor. The first rotor 300a and the second rotor 300b are arranged in the axial direction AD. The stator 200 is provided between two rotors, that is, the first rotor 300a and the second rotor 300b. The stator 200 is located at a position away from the rotors 300a, 300b in the axial direction AD. The motor 61 of the present embodiment may be referred to as a double-axial motor.

In the axial direction AD, the first rotor 300a is provided on an upstream plate 106 side. The first rotor 300a is located at a position away from the upstream plate 106 toward the partition plate 108. The first rotor 300a extends in the circumferential direction CD along the upstream plate 106. In the axial direction AD, the second rotor 300b is provided on a partition plate 108 side. The second rotor 300b is located at a position away from the partition plate 108 toward the upstream plate 106. The second rotor 300b extends in the circumferential direction CD along the partition plate 108. The rotors 300a, 300b are located at positions away from the motor outer peripheral wall 71 toward the radially inner side.

The motor shaft 340 supports the rotors 300a, 300b. The motor shaft 340 rotates around the motor axis Cm together with the rotors 300a, 300b. A center line of the motor shaft 340 coincides with the motor axis Cm. The motor shaft 340 connects the rotors 300a, 300b to the EPU shaft 51. The motor shaft 340 and the EPU shaft 51 are arranged in the axial direction AD. The center line of the motor shaft 340 coincides with the EPU axis Cepu. The center line of the motor shaft 340 may be located at a position deviated from the EPU axis Cepu in the radial direction RD.

The motor shaft 340 includes a shaft main body 341 and a shaft flange 342. The shaft main body 341 is formed in a tubular shape and extends in the axial direction AD along the motor axis Cm. The shaft flange 342 extends from the shaft main body 341 toward the radially outer side. The shaft flange 342 is fixed to the rotors 300a, 300b. The shaft flange 342 partitions the motor space 74 in the axial direction AD. The rotors 300a, 300b are located at positions away from the shaft main body 341 toward the radially outer side.

Each of the rotors 300a, 300b includes magnets 310 and a magnet holder 320. Multiple magnets 310 are arranged in the circumferential direction CD in each of the rotors 300a, 300b. Each of the magnets 310 is a permanent magnet and forms a magnetic field. The magnets 310 of the first rotor 300a and the magnets 310 of the second rotor 300b are arranged in the axial direction AD with the stator 200 interposed therebetween. The rotors 300a and 300b are provided such that the magnets 310 are arranged with the motor coil 211 interposed therebetween in the axial direction AD. The magnet holder 320 supports the magnets 310. The magnet holder 320 forms an outline of each of the rotors 300a, 300b as a whole. The magnet holder 320 is fixed to the shaft flange 342.

The motor device 60 includes an upstream bearing 360 and a downstream bearing 361. The bearings 360, 361 rotatably support the motor shaft 340. The upstream bearing 360 and the downstream bearing 361 are arranged in the axial direction AD with the shaft flange 342 interposed therebetween. The upstream bearing 360 is fixed to the upstream plate 106. The downstream bearing 361 is fixed to the partition plate 108.

In the motor device 60, at least a part of the motor 61 is accommodated in the motor space 74. The rotors 300a, 300b, the stator 200, and the bearings 360, 361 are accommodated in the motor space 74. At least a part of the motor shaft 340 is accommodated in the motor space 74.

The inverter device 80 includes a drive board 510, filter components 524, arm switch units 530, a control board 550, and smoothing capacitor units 580. The drive board 510, the filter components 524, the arm switch units 530, the control board 550, and the smoothing capacitors 145 are accommodated in the inverter housing 90. The inverter 81 is formed by the drive board 510, the arm switch units 530, and the like. A microcomputer 165 is mounted on the control board 550. The control circuit 160 is formed by the control board 550, the microcomputer 165, and the like.

Each of the drive board 510 and the control board 550 is formed in a plate shape and extends in a direction orthogonal to the axial direction AD. Each of the drive board 510 and the control board 550 is a circuit board including a wiring pattern and the like. The drive board 510 and the control board 550 are arranged in the axial direction AD. The control board 550 is located between the drive board 510 and the downstream plate 107. In the axial direction AD, a distance between the drive board 510 and the control board 550 is smaller than a distance between the drive board 510 and the partition plate 108.

The drive board 510 partitions the inverter space 94 into a first drive space 94a and a second drive space 94b. The first drive space 94a and the second drive space 94b are included in the inverter space 94. The first drive space 94a and the second drive space 94b are arranged in the axial direction AD with the drive board 510 interposed therebetween. The first drive space 94a is a space between the drive board 510 and the partition plate 108. The second drive space 94b is a space between the drive board 510 and the downstream plate 107. The control board 550 is provided in the second drive space 94b.

The control board 550 has a board opening 553. The board opening 553 penetrates the control board 550 in the axial direction AD. The board opening 553 is provided at a center of the control board 550. The center of the board opening 553 is located at a position through which the motor axis Cm passes. An inner diameter of the board opening 553 is, for example, larger than an outer diameter of the shaft main body 341.

As shown in FIGS. 1 and 3, in the drive board 510, a drive board outer peripheral end 512 extends in the circumferential direction CD along the inverter inner wall surface 91a. The drive board outer peripheral end 512 is an outer peripheral end of the drive board 510. The drive board outer peripheral end 512 is located at a position in contact with or close to the inverter inner wall surface 91a. In the control board 550, a control board outer peripheral end 552 extends in the circumferential direction CD along the inverter inner wall surface 91a. The control board outer peripheral end 552 is an outer peripheral end of the control board 550. The control board outer peripheral end 552 is located at a position in contact with or close to the inverter inner wall surface 91a.

The drive board 510 has a first drive board surface 510a and a second drive board surface 510b. Of the pair of plate surfaces of the drive board 510, the plate surface facing the partition plate 108 is the first drive board surface 510a, and the plate surface facing the downstream plate 107 is the second drive board surface 510b. The second drive board surface 510b extends along the control board 550.

The drive board 510 is a circuit board to which the electric power for driving the motor 61 is supplied. The drive board 510 may be referred to as a power board. Multiple filter components 524 and multiple smoothing capacitor units 580 are provided on the drive board 510. The filter components 524 and the smoothing capacitor units 580 are mounted on the drive board 510 while protruding from the first drive board surface 510a.

Each of the smoothing capacitor units 580 is a component including the smoothing capacitor 145. The smoothing capacitor unit 580 includes an element forming the smoothing capacitor 145, and a protective portion made of resin or the like for protecting the element.

As shown in FIG. 3, the multiple filter components 524 include common-mode coil units 525, normal-mode coil units 526, Y capacitor units 527, and X capacitor units 528. Each of the common-mode coil units 525 includes the common-mode coil 151. The common-mode coil unit 525 includes an element forming the common-mode coil 151 and a protective portion made of resin or the like for protecting the element. Multiple common-mode coil units 525 are provided on the drive board 510. Each of the normal-mode coil units 526 includes the normal-mode coil 152. The normal-mode coil unit 526 includes an element forming the normal-mode coil 152 and a protective portion made of resin or the like for protecting the element. Multiple normal-mode coil units 526 are provided on the drive board 510.

Each of the Y capacitor units 527 includes the Y capacitor 153. The Y capacitor unit 527 includes an element forming the Y capacitor 153 and a protective portion made of resin or the like for protecting the element. Multiple Y capacitor units 527 are provided on the drive board 510. Each of the X capacitor units 528 includes the X capacitor 154. The X capacitor unit 528 includes an element forming the X capacitor 154 and a protective portion made of resin or the like for protecting the element. Multiple X capacitor units 528 are provided on the drive board 510.

The current sensors 146, 147 are provided on the drive board 510 together with the smoothing capacitor units 580 and the like. The current sensors 146, 147 are mounted on the drive board 510 while protruding from the first drive board surface 510a. Multiple motor current sensors 146 are provided corresponding to the U-phase, the V-phase, and the W-phase. One battery current sensor 147 is provided corresponding to the P-line 141.

As shown in FIGS. 1 and 3, the inverter device 80 includes the arm switch units 530. Each of the arm switch units 530 includes the arm switch 86. The arm switch unit 530 includes an element such as a MOSFET forming the arm switch 86, and a protective portion made of a resin for protecting the element. The arm switch units 530 are arranged in the circumferential direction CD along the inverter inner wall surface 91a. The arm switch units 530 are provided on a side of the first drive board surface 510a facing the drive board 510. For example, each of the arm switch units 530 is located at a position away from the drive board 510 toward the partition plate 108.

The arm switch unit 530 includes a switch main body and a switch terminal. The switch main body includes an element such as a MOSFET and a protective portion. The switch main body is formed in, for example, a rectangular parallelepiped shape. The switch terminal is a terminal such as a drain terminal extending from the switch main body. Multiple arm switch units 530 are provided on the drive board 510. The arm switch units 530 are mounted on the drive board 510 while protruding from the first drive board surface 510a.

In the inverter device 80, at least a part of the inverter 81 is accommodated in the inverter space 94. The filter components 524, the arm switch units 530, and the smoothing capacitor units 580 are accommodated in the inverter space 94. The drive board 510, the control board 550, and the microcomputer 165 are accommodated in the inverter space 94. Heat generation components which generate heat when energized are accommodated in the inverter space 94. Examples of the heat generation components include the arm switch unit 530, the smoothing capacitor unit 580, and the filter component 524.

As shown in FIG. 3, in the drive board 510, the arm switch unit 530, the filter component 524, and the smoothing capacitor unit 580 are arranged in the radial direction RD. For example, the multiple smoothing capacitor units 580 are provided between the multiple filter components 524 and the multiple arm switch units 530 in the radial direction RD. The multiple smoothing capacitor units 580 are arranged in a direction orthogonal to an arrangement direction of the filter components 524 and the arm switch units 530. The multiple arm switch units 530 are arranged in the radial direction RD. The multiple filter components 524 are also arranged in the radial direction RD.

As shown in FIG. 1, the inverter device 80 includes a power connector 96 and a signal connector 97. The power connector 96 and the signal connector 97 are connectors for connecting the inverter device 80 to external devices. Examples of the external device to which the power connector 96 is connected include the battery 31. For example, the power connector 96 is electrically connected to the battery 31 via a power cable or the like. Examples of the external device to which the signal connector 97 is connected include the flight control device 40. For example, the signal connector 97 is communicably connected to the flight control device 40 via a signal cable or the like.

The power connector 96 and the signal connector 97 are provided on an outer surface of the inverter housing 90. For example, the power connector 96 is provided on the inverter outer peripheral wall surface 90c. The signal connector 97 is provided on the inverter downstream wall surface 90b.

In the EPU 50, output of the motor 61 is output of the EPU 50. In the motor device 60, a current, a voltage, a workload, energy, torque, a motor rotation speed, or the like is the output of the motor 61. In the motor 61, the output may decrease when a motor temperature is too high. The motor temperature is a temperature of the motor device 60 or the motor 61, and is a temperature of the motor coil 211, the coil protection portion 250, the motor space 74, or the like. In the inverter device 80, a current, a voltage, or the like is the output from the inverter 81. In the inverter 81, the output may decrease when an inverter temperature is too high. The inverter temperature is a temperature of the inverter device 80 or the inverter 81, and is a temperature of the arm switch unit 530, the inverter space 94, or the like.

In the EPU 50, since the motor device 60 and the inverter device 80 are cooled, the output of the motor device 60 and the output of the inverter device 80 are less likely to decrease. That is, an output density [kw/kg] of the EPU 50 is less likely to decrease. The output density is an output per unit mass in the EPU 50. In the EPU 50, the output density tends to increase by cooling the motor device 60 and the inverter device 80.

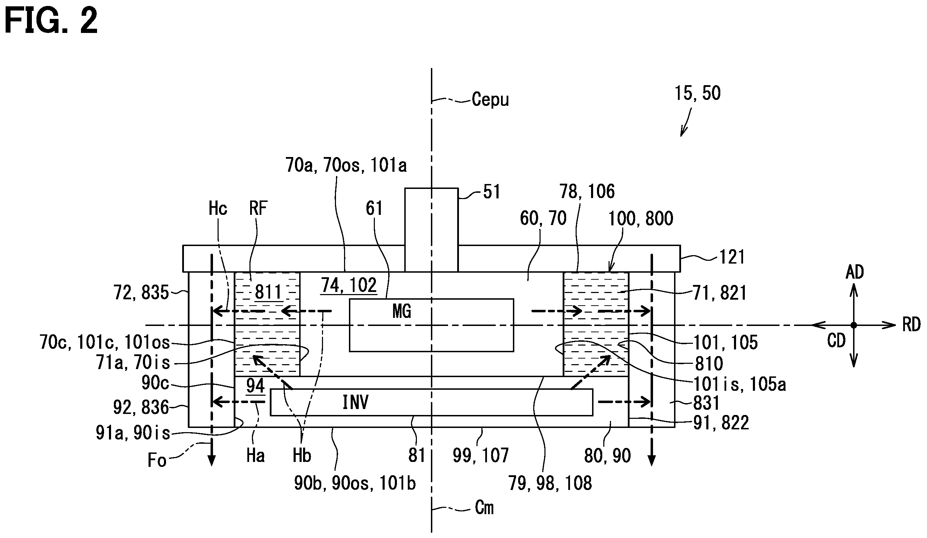

In FIGS. 1 and 2, in the EPU 50, an air cooling system and a liquid cooling system are used as a cooling system for cooling the EPU 50. In the EPU 50, an external cooling system which cools the EPU 50 from the outside is used as the air cooling system. In the external cooling system, the EPU 50 is cooled by an external air Fo flowing outside the EPU 50. The external air Fo is a gas such as outside air existing outside the EPU 50. In the EPU 50, the heat of the motor 61 and the inverter 81 is dissipated to the external air Fo, thereby cooling the motor 61 and the inverter 81. The external air Fo flows along the unit outer surface 101os. For example, the external air Fo flows in the axial direction AD along the unit outer peripheral wall surface 101c.

The EPU 50 includes outer peripheral wall fins 831. The outer peripheral wall fins 831 are included in the motor unit 100. The outer peripheral wall fins 831 are provided on the unit outer peripheral wall surface 101c. The outer peripheral wall fins 831 are heat dissipation fins for dissipating heat of the motor unit 100 to the outside. The outer peripheral wall fins 831 cool the motor unit 100 by dissipating the heat. Each of the outer peripheral wall fins 831 is made of a metal material or the like and has a thermal conduction property. The outer peripheral wall fin 831 protrudes from the unit outer peripheral wall 105 toward the radially outer side. The outer peripheral wall fin 831 is formed in a plate shape and extends in a direction orthogonal to the circumferential direction CD. The outer peripheral wall fin 831 extends in the axial direction AD. Multiple outer peripheral wall fins 831 are arranged in the circumferential direction CD.

The EPU 50 includes motor fins 72 and inverter fins 92. The motor fins 72 and the inverter fins 92 are included in the outer peripheral wall fins 831. In the outer peripheral wall fin 831, a portion provided on the motor outer peripheral wall surface 70c is the motor fin 72. The motor fins 72 are included in the motor housing 70. In the outer peripheral wall fin 831, a portion provided on the inverter outer peripheral wall surface 90c is the inverter fin 92. The inverter fins 92 is included in the inverter housing 90. In the outer peripheral wall fin 831, the motor fin 72 and the inverter fin 92 may be integrally provided, or may be provided apart from each other.

In the EPU 50, an effect of cooling the motor unit 100 by the external air Fo is enhanced by the outer peripheral wall fins 831. Since each of the outer peripheral wall fins 831 extends in the axial direction AD, the external air Fo tends to flow along the outer peripheral wall fins 831. Therefore, the heat of the motor unit 100 is easily dissipated from the outer peripheral wall fins 831 to the external air Fo. For example, the heat of the motor device 60 is easily dissipated from the motor fins 72 to the external air Fo, and the heat of the inverter device 80 is easily dissipated from the inverter fins 92 to the external air Fo.

The EPU 50 includes a blower fan 121. The blower fan 121 is arranged on the motor unit 100 in the axial direction AD. The blower fan 121 is provided between the propeller 20 and the motor unit 100 in the axial direction AD. The blower fan 121 is located on the upwind side of the propeller wind with respect to the motor unit 100. The blower fan 121 blows air such that the external air Fo flows along the outer peripheral wall fins 831. For example, the blower fan 121 blows air toward the downwind side of the propeller wind to cause the external air Fo to flow. The blower fan 121 pumps the external air Fo toward the motor unit 100. The blower fan 121 may be referred to as a pressure feed fan.

The blower fan 121 blows air as the motor 61 is driven. The blower fan 121 is provided on the EPU shaft 51. The blower fan 121 is connected to the motor shaft 340 via the EPU shaft 51. The blower fan 121 rotates about the motor axis Cm together with the motor shaft 340. The blower fan 121 is an axial flow fan and blows air in the axial direction AD. The blower fan 121 is a mechanical fan that is rotated by the motor shaft 340.

The blower fan 121 includes blower blades 122 and a blower boss 123. Multiple blower blades 122 are arranged in the circumferential direction CD. The blower boss 123 connects the multiple blower blades 122. Each of the blower blades 122 extends from the blower boss 123 toward the radially outer side. The blower boss 123 is fixed to the EPU shaft 51. The blower boss 123 extends in the circumferential direction CD along an outer peripheral surface of the EPU shaft 51. At least a part of the blower blade 122 is located at a position aligned with the outer peripheral wall fin 831 in the axial direction AD.

The EPU 50 includes a cooling device 800. The cooling device 800 is included in the liquid cooling system. The cooling device 800 cools the EPU 50 using a refrigerant RF. As the refrigerant RF, for example, a liquid such as a coolant is used. The refrigerant RF may be referred to as a liquid refrigerant. In the EPU 50, a cooling method using the refrigerant RF is used as a liquid cooling method. In the cooling device 800, the heat of the motor 61 and the inverter 81 is dissipated to the refrigerant RF, thereby cooling the motor 61 and the inverter 81. The heat of the refrigerant RF is dissipated to the external air Fo via, for example, the outer peripheral wall fins 831.

The cooling device 800 includes a refrigerant pump 801 and a refrigerant passage 810. The refrigerant passage 810 is a passage for the refrigerant RF to flow therethrough. The refrigerant passage 810 is a circulation passage for the refrigerant RF to circulate in the cooling device 800. The refrigerant passage 810 is filled with the refrigerant RF. The refrigerant passage 810 is included in the EPU 50, and allows circulation of the refrigerant RF in the EPU 50. The refrigerant passage 810 is provided such that the refrigerant RF cools both the motor device 60 and the inverter device 80. The EPU 50 includes a passage forming portion in which the refrigerant passage 810 is formed. The passage forming portion is included in the unit housing 101 or the like. The passage forming portion is included in the liquid cooling system together with the cooling device 800.

The refrigerant pump 801 pumps the refrigerant RF in the refrigerant passage 810 such that the refrigerant RF flows through the refrigerant passage 810. The refrigerant pump 801 is a circulation pump for circulating the refrigerant RF in the refrigerant passage 810. The refrigerant pump 801 is, for example, an electric pump. The refrigerant pump 801 is driven by electric power from the battery 31. The refrigerant pump 801 is included in the inverter device 80. The coolant pump 801 is provided, for example, on the drive board 510.

As shown in FIGS. 1, 2, and 4, the refrigerant passage 810 includes a motor outer peripheral passage 811. The motor outer peripheral passage 811 is provided to cover the motor 61 from an outer peripheral side. The motor outer peripheral passage 811 is a jacket for the motor 61. The motor outer peripheral passage 811 is formed in an annular shape to extend in the circumferential direction CD. The motor outer peripheral passage 811 is provided in the motor housing 70. On the other hand, the motor outer peripheral passage 811 is not provided in the inverter housing 90.

The motor outer peripheral passage 811 is provided at a position covering the motor coil 211 from the outer peripheral side. The motor outer peripheral passage 811 extends along an outer peripheral surface of the motor coil 211. The motor outer peripheral passage 811 can cool at least the motor coil 211 in the motor 61. The motor outer peripheral passage 811 cools the motor coil 211 from the outer peripheral side. The motor outer peripheral passage 811 corresponds to a coil cooling passage.

The motor outer peripheral passage 811 extends along the unit outer surface 101os such that the refrigerant RF flows along the unit outer surface 101os. The motor outer peripheral passage 811 corresponds to an outer surface passage. The motor outer peripheral passage 811 is built in the unit housing 101. The motor outer peripheral passage 811 is provided on an inner side of the unit outer surface 101os in the unit housing 101. The motor outer peripheral passage 811 corresponds to a built-in passage. The motor outer peripheral passage 811 is provided between the unit outer surface 101os and the unit inner surface 101is in the unit housing 101.

The motor unit 100 includes a unit liquid-cooling portion 821 and liquid cooling fins 835. The unit liquid-cooling portion 821 is a part which performs liquid cooling by the refrigerant RF in the unit housing 101. The unit liquid-cooling portion 821 is the passage forming portion which forms the motor outer peripheral passage 811 in the unit housing 101. On the unit liquid-cooling portion 821, the unit outer surface 101os and the unit inner surface 101is are formed. The motor outer peripheral passage 811 is built in the unit liquid-cooling portion 821. The unit liquid-cooling portion 821 corresponds to a passage built-in portion.

The liquid cooling fins 835 are heat dissipation fins for dissipating heat of the unit liquid-cooling portion 821 to the outside. The liquid cooling fins 835 are provided on an outer side of the unit liquid-cooling portion 821. The liquid cooling fins 835 are provided on the unit outer surface 101os of the unit liquid-cooling portion 821. Multiple liquid cooling fins 835 are arranged along the unit outer surface 101os. Each of the liquid cooling fins 835 extends outward from the unit liquid-cooling portion 821. The liquid cooling fins 835 dissipate the heat of the refrigerant RF flowing inside the unit liquid-cooling portion 821 to the outside. The liquid cooling fin 835 corresponds to a refrigerant fin and an outer fin.

In the present embodiment, the motor outer peripheral passage 811 is included in the motor device 60. The motor outer peripheral passage 811 extends along the motor housing outer surface 70os such that the refrigerant RF flows along the motor housing outer surface 70os. The motor outer peripheral passage 811 is built in the motor housing 70. The motor outer peripheral passage 811 is provided in the motor housing 70 between the motor housing outer surface 70os and the motor housing inner surface 70is. The unit liquid-cooling portion 821 is included in the motor housing 70.

The motor outer peripheral passage 811 extends along the motor outer peripheral wall surface 70c such that the refrigerant RF flows along the motor outer peripheral wall surface 70c. The motor outer peripheral passage 811 is incorporated in the motor outer peripheral wall 71. The motor outer peripheral passage 811 extends in the axial direction AD to span the motor upstream wall 78 and the motor downstream wall 79. The motor outer peripheral passage 811 is provided in the motor outer peripheral wall 71 between the motor outer peripheral wall surface 70c and the motor inner wall surface 71a. The unit liquid-cooling portion 821 includes at least a part of the motor outer peripheral wall 71. For example, the motor outer peripheral wall 71 is the unit liquid-cooling portion 821.

The liquid cooling fin 835 is at least a part of the outer peripheral wall fin 831. In the present embodiment, the liquid cooling fin 835 is at least a part of the motor fin 72. For example, the motor fin 72 is the liquid cooling fin 835. As the liquid cooling fins 835, the motor fins 72 dissipate, to the outside, heat of the refrigerant RF flowing inside the motor outer peripheral wall 71.

As shown in FIGS. 1 and 2, the motor outer peripheral passage 811 is provided at a position aligned with both the motor device 60 and the inverter device 80 in a direction orthogonal to the circumferential direction CD. The motor outer peripheral passage 811 corresponds to a common passage. In the radial direction RD which is a direction among directions orthogonal to the circumferential direction CD, the motor outer peripheral passage 811 and the motor device 60 are arranged. In the present embodiment, the motor outer peripheral passage 811 is located on the radially outer side of the motor housing 70, and thus the motor outer peripheral passage 811 and the motor device 60 are arranged in the radial direction RD. The motor outer peripheral passage 811 is provided on the outer peripheral side of the motor device 60. The motor outer peripheral passage 811 is aligned with the motor housing inner surface 70is in the radial direction RD. The refrigerant RF flowing through the motor outer peripheral passage 811 cools the motor device 60 from the radially outer side. For example, the refrigerant RF flowing through the motor outer peripheral passage 811 cools the motor coil 211 from the outer peripheral side.

In the axial direction AD which is a direction among directions orthogonal to the circumferential direction CD, the motor outer peripheral passage 811 and the inverter device 80 are arranged. The motor outer peripheral passage 811 is provided between the inverter housing inner surface 90is and the motor upstream wall surface 70a in the axial direction AD. Since the motor outer peripheral wall 71 includes the unit liquid-cooling portion 821, the motor inner wall surface 71a is provided on the radially inner side with respect to the inverter inner wall surface 91a in the radial direction RD. At least a part of the motor outer peripheral passage 811 is on the radially inner side with respect to the inverter inner wall surface 91a. The refrigerant RF flowing through the motor outer peripheral passage 811 cools the inverter device 80 from a side facing the inverter upstream wall surface 90a.

The motor unit 100 includes a unit air-cooling portion 822 and air cooling fins 836. The unit air-cooling portion 822 is a portion which performs air cooling in the unit housing 101. The unit air-cooling portion 822 is aligned with the unit liquid-cooling portion 821 along the unit outer surface 101os. For example, the unit air-cooling portion 822 and the unit liquid-cooling portion 821 are arranged in the axial direction AD along the unit outer surface 101os. The unit air-cooling portion 822 is provided on the downwind side of the external air Fo with respect to the unit liquid-cooling portion 821. The refrigerant passage 810 is not formed in the unit air-cooling portion 822.

The air cooling fins 836 are heat dissipation fins for dissipating heat of the unit air-cooling portion 822 to the outside. The air cooling fins 836 are provided on an outer side of the unit air-cooling portion 822. The air cooling fins 836 are provided on the unit outer surface 101os of the unit air-cooling portion 822. Multiple air cooling fins 836 are arranged along the unit outer surface 101os. Each of the air cooling fins 836 extends outward from the unit air-cooling portion 822. The air cooling fins 836 are aligned with the liquid cooling fins 835 along the unit outer surface 101os. For example, the air cooling fins 836 and the liquid cooling fins 835 are arranged in the axial direction AD along the unit outer surface 101os. The air cooling fins 836 are provided on the downwind side of the external air Fo with respect to the liquid cooling fins 835. The air cooling fins 836 dissipate heat of the unit housing 101 to the outside. The air cooling fin 836 corresponds to a housing fin. The liquid cooling fin 835 and the air cooling fin 836 may be provided integrally or may be provided apart from each other.

The unit air-cooling portion 822 is included in the inverter housing 90. The unit air-cooling portion 822 is at least a part of the inverter outer peripheral wall 91. For example, the inverter outer peripheral wall 91 is the unit air-cooling portion 822. The unit air-cooling portion 822 is aligned with the unit liquid-cooling portion 821 in the axial direction AD. The air cooling fin 836 is at least a part of the outer peripheral wall fin 831. In the present embodiment, the air cooling fin 836 is at least a part of the inverter fin 92. For example, the inverter fin 92 is the air cooling fin 836. As the air cooling fins 836, the inverter fins 92 dissipate heat of the inverter outer peripheral wall 91 to the outside.

As shown in FIGS. 1 and 2, the heat transferred to the unit air-cooling portion 822 in the inverter device 80 is dissipated to the outside from the air cooling fins 836 as heat Ha. For example, heat generated by the arm switch unit 530 or the like is transferred as the heat Ha from the inverter space 94 to the inverter outer peripheral wall 91, and then dissipated to the outside from the inverter fins 92.

Heat transferred to the unit liquid-cooling portion 821 in the motor unit 100 is applied to the refrigerant RF as heat Hb. For example, heat generated by the motor coil 211 or the like is transferred as heat Hb from the motor space 74 to the refrigerant RF. The heat generated by the arm switch unit 530 or the like is transferred as heat Hb from the inverter space 94 to the refrigerant RF. The heat Hb transferred to the refrigerant RF is dissipated as heat Hc from the liquid cooling fins 835 to the outside in the unit liquid-cooling portion 821. For example, the heat Hc is transferred from the refrigerant RF to the motor fins 72 in the motor outer peripheral wall 71, and is dissipated from the motor fins 72 to the outside.

In the motor unit 100, the heat is also dissipated to the outside from portions different from the unit liquid-cooling portion 821 and the unit air-cooling portion 822. For example, the heat of the motor device 60 and the inverter device 80 is also dissipated to the outside from the upstream plate 106 and the downstream plate 107.

When the refrigerant pump 801 is driven, the refrigerant RF circulates through the refrigerant passage 810 to pass through the motor outer peripheral passage 811. In the motor outer peripheral passage 811, the refrigerant RF flows to circulate in the circumferential direction CD. The refrigerant RF absorbs the heat of the motor device 60 and the inverter device 80 in the motor outer peripheral passage 811, and dissipates the heat from the liquid cooling fins 835 to the outside. The heat of the refrigerant RF is also dissipated to the outside from the unit outer surface 101os and the air cooling fins 836 in addition to the liquid cooling fins 835.

When the blower fan 121 blows air, the external air Fo flows along the outer peripheral wall fins 831. For example, the external air Fo flows along the air cooling fins 836 after flowing along the liquid cooling fins 835. That is, the external air Fo flows along the inverter fins 92 after flowing along the motor fins 72. In this case, the dissipate of the heat Hc from the inverter fins 92 to the external air Fo is promoted by the external air Fo. The dissipate of the heat Ha from the motor fins 72 to the external air Fo is promoted by the external air Fo.

According to the present embodiment described above, both the motor device 60 and the inverter device 80 are cooled by the refrigerant RF circulating through the refrigerant passage 810. In the configuration, both an increase in the temperature of the motor device 60 and an increase in the temperature of the inverter device 80 can be reduced by the refrigerant RF. Therefore, in each of the motor device 60 and the inverter device 80, a decrease in the output such as the current due to the increase in the temperature is less likely to occur. Accordingly, the output density of the EPU 50 can be improved.

Moreover, since the refrigerant RF circulates through the refrigerant passage 810, it is not necessary to supply the refrigerant RF from the outside to the EPU 50. Therefore, it is not necessary to mount, on the eVTOL 10, a supply device for supplying the refrigerant RF to the EPU 50. Accordingly, the eVTOL 10 can be reduced in weight by eliminating a need for the supply device. Further, it is not necessary to connect, to the EPU 50, a supply pipe for supplying the refrigerant RF from the supply device to the EPU 50. Accordingly, the EPU 50 can be reduced in weight by eliminating a need for the supply pipe.

For example, a comparative example in which, unlike the present embodiment, only one of the motor device 60 and the inverter device 80 is cooled by the liquid cooling system is assumed. In the comparative example, a cooling performance required for the liquid cooling system is limited to a cooling performance capable of cooling only one of the motor device 60 and the inverter device 80. In this way, in the liquid cooling system of the comparative example, the required cooling performance is not high, and thus an output decrease due to the temperature increase of the EPU 50 is likely to occur.

Meanwhile, in the present embodiment, both the motor device 60 and the inverter device 80 are cooled by the liquid cooling system. Therefore, the cooling performance required for the liquid cooling system in the present embodiment is likely to increase as compared with the comparative example. In the present embodiment, both the motor device 60 and the inverter device 80 can be effectively cooled by the refrigerant **RF** of the liquid cooling system. Therefore, even if the cooling performance required for the liquid cooling system is increased, the effect of cooling the motor device 60 and the inverter device 80 is high, and thus the output decrease due to the temperature increase of the **EPU** 50 is less likely to occur. Accordingly, the output density of the **EPU** 50 can be improved by enhancing the effect of cooling the **EPU** 50.

According to the present embodiment, the motor outer peripheral passage 811 is arranged on both the motor device 60 and the inverter device 80 in a direction orthogonal to the circumferential direction CD. In the configuration, both the motor device 60 and the inverter device 80 can be cooled by the motor outer peripheral passage 811, which is at least a part of the refrigerant passage 810. Therefore, it is not necessary to provide the motor outer peripheral passage 811 individually for each of the motor device 60 and the inverter device 80. Accordingly, an entire length of the motor outer peripheral passage 811 can be shortened. When the motor outer peripheral passage 811 is shortened, the EPU 50 can be reduced in weight by reducing a size of the unit liquid-cooling portion 821 or the like forming the motor outer peripheral passage 811, reducing an amount of the refrigerant RF flowing through the motor outer peripheral passage 811, or the like. By shortening the motor outer peripheral passage 811 in this way, the output density of the EPU 50 can be improved.

Moreover, the motor outer peripheral passage 811 extends in the circumferential direction CD. Therefore, in the motor outer peripheral passage 811, the refrigerant RF tends to flow in the circumferential direction CD. Accordingly, the refrigerant RF flowing through the motor outer peripheral passage 811 can collectively cool both the motor device 60 and the inverter device 80. Accordingly, an effect of cooling one of the motor device 60 and the inverter device 80 by the refrigerant RF is less likely to be lower than an effect of cooling the other by the refrigerant RF. Accordingly, the effect of cooling one of the motor device 60 and the inverter device 80 can be prevented from being insufficient.

For example, a configuration is assumed in which, unlike the present embodiment, the refrigerant RF flowing through the motor outer peripheral passage 811 cools the motor device 60 and then cools the inverter device 80. In the configuration, the refrigerant RF cools the inverter device 80 after the heat of the motor device 60 is applied to the refrigerant RF. Therefore, the effect of cooling the inverter device 80 by the refrigerant RF may be lower than the effect of cooling the motor device 60 by the refrigerant RF.

According to the present embodiment, the motor outer peripheral passage 811 is arranged on the inverter device 80 in the axial direction AD and is provided on the outer peripheral side of the motor device 60. In the configuration, it is not necessary to provide the motor outer peripheral passage 811 on the outer peripheral side of the inverter device 80. Therefore, for example, as compared with a configuration in which the motor outer peripheral passage 811 is provided on the outer peripheral side of the inverter device 80, the motor outer peripheral passage 811 can be shortened in the circumferential direction CD. As described above, by shortening the motor outer peripheral passage 811, the EPU 50 can be reduced in weight, and the output density of the EPU 50 can be improved.

In the present embodiment, by arranging the motor outer peripheral passage 811 on a part of the inverter device 80 in the axial direction AD, it is considered that a cooling effect of the motor outer peripheral passage 811 on the inverter device 80 is lower than a cooling effect of the motor outer peripheral passage 811 on the motor device 60. On the other hand, as described above, the EPU 50 can be reduced in weight by shortening the motor outer peripheral passage 811. In this way, the output density of the EPU 50 can be improved by the reduction in weight of the EPU 50 without greatly reducing the cooling effect of the motor outer peripheral passage 811 on the inverter device 80.

According to the present embodiment, the motor outer peripheral passage 811 cools the motor coil 211. In the configuration, since the motor coil 211 which is most likely to generate heat in the motor device 60 is cooled by the motor outer peripheral passage 811, the cooling effect of the motor outer peripheral passage 811 on the motor device 60 can be effectively used. For example, in the motor device 60 in which the motor coil 211 is a component having a largest heat generation amount among components constituting the motor 61, it is most effective to cool the motor coil 211 by the motor outer peripheral passage 811 in terms of cooling the motor device 60.

According to the present embodiment, the liquid cooling fins 835 are provided on the unit outer surface 101os to dissipate the heat of the refrigerant RF. In the configuration, even when the heat of the motor device 60 and the inverter device 80 is applied to the refrigerant RF, the heat is easily dissipated to the outside via the liquid cooling fins 835. That is, dissipation of the heat from the refrigerant RF is promoted by the liquid cooling fins 835. Therefore, accumulation of the heat in the refrigerant RF can be limited by the liquid cooling fins 835. Accordingly, the accumulation of heat in the refrigerant RF and the decrease in the cooling effect of the refrigerant RF can be avoided.

In the present embodiment, since the EPU 50 includes the liquid cooling fins 835, the EPU 50 is increased in weight by an amount corresponding to the liquid cooling fins 835. On the other hand, as described above, the dissipation of the heat from the refrigerant RF is promoted by the liquid cooling fins 835. Therefore, the cooling effect of the refrigerant RF can be maintained by the liquid cooling fins 835, and the EPU 50 can be reduced in weight by reducing a size of the motor outer peripheral passage 811, reducing the amount of the refrigerant RF, and reducing a size of the refrigerant pump 801. Accordingly, the output density of the EPU 50 can be improved by the liquid cooling fins 835.

According to the present embodiment, the blower fan 121 blows air such that the external air Fo flows along the liquid cooling fins 835. In the configuration, the heat of the refrigerant RF is easily dissipated to the external air Fo via the liquid cooling fins 835. That is, the dissipation of the heat from the refrigerant RF is promoted by air blowing of the blower fan 121. Therefore, the accumulation of heat in the refrigerant RF and the decrease in the cooling effect of the refrigerant RF can be reliably limited by the air blowing of the blower fan 121.

In the present embodiment, since the EPU 50 includes the blower fan 121, the EPU 50 is increased in weight by an amount corresponding to the blower fan 121. On the other hand, as described above, the dissipation of the heat from the refrigerant RF is promoted by the air blowing of the blower fan 121. Therefore, the cooling effect of the refrigerant RF can be maintained by the blower fan 121, and the EPU 50 can be reduced in weight by reducing the size of the motor outer peripheral passage 811, reducing the amount of the refrigerant RF, and reducing the size of the refrigerant pump 801. Accordingly, the output density of the EPU 50 can be improved by the blower fan 121.

According to the present embodiment, the EPU 50 drives the eVTOL 10 to fly. In the configuration, the output density of the EPU 50 can be improved by the refrigerant RF circulating through the refrigerant passage 810, in a state where the eVTOL 10 is flying under driving of the EPU 50. In an aircraft such as the eVTOL 10, a demand for reducing a concern of malfunction is severe, and a demand for the output density of the EPU 50 is also severe. Meanwhile, in the present embodiment, an effect of improving the output density of the EPU 50 by the refrigerant RF can be effectively exhibited in terms of realizing a severe demand for the output density of the EPU 50.

According to the present embodiment, an inside of the unit housing 101 is cooled by the refrigerant RF circulating through the refrigerant passage 810, for example. In the configuration, the temperature increase of the motor 61 or the inverter 81 inside the unit housing 101 can be reduced by the refrigerant RF. Therefore, in the motor 61 or the inverter 81, the output such as the current is less likely to decrease. Moreover, the heat of the refrigerant RF is dissipated to the outside by the liquid cooling fins 835 provided on the unit outer surface 101os. In the configuration, the cooling effect of cooling the motor 61 and the inverter 81 by the refrigerant RF can be enhanced by the liquid cooling fins 835. Accordingly, the output density of the EPU 50 can be improved by the liquid cooling fins 835.

Moreover, as described above, since the refrigerant RF circulates through the refrigerant passage 810, it is not necessary to supply the refrigerant RF from the outside to the EPU 50. Accordingly, the eVTOL 10 can be reduced in weight by eliminating a need for the supply device, and the EPU 50 can be reduced in weight by eliminating a need for the supply pipe.

In the present embodiment, the EPU 50 is increased in weight by an amount corresponding to the liquid cooling fins 835. On the other hand, in the EPU 50, the accumulation of heat in the refrigerant RF and the decrease in the cooling effect of the refrigerant RF can be limited by the refrigerant RF and the liquid cooling fins 835. Since the EPU 50 is cooled efficiently by the refrigerant RF and the liquid cooling fins 835 in this way, the output density of the EPU 50 can be improved by the liquid cooling fins 835.

According to the present embodiment, the multiple liquid cooling fins 835 are arranged along the motor outer peripheral passage 811 to dissipate the heat of the refrigerant RF flowing through the motor outer peripheral passage 811. In the configuration, even when the refrigerant RF flows through positions such as the motor outer peripheral passage 811, the heat of the refrigerant RF is easily transferred to the liquid cooling fins 835. That is, in the motor outer peripheral passage 811, the heat of the refrigerant RF is easily dissipated to the outside from the liquid cooling fins 835 regardless of the position of the refrigerant RF. Therefore, the accumulation of heat in the refrigerant RF can be reliably limited by the liquid cooling fins 835.

According to the present embodiment, the unit liquid-cooling portion 821 in which the motor outer peripheral passage 811 is built is included in the unit housing 101. In the configuration, the unit housing 101 can be cooled directly by the refrigerant RF flowing through the motor outer peripheral passage 811. Therefore, accumulation of the heat of the motor device 60 and the inverter device 80 in the unit housing 101 can be limited by the unit liquid-cooling portion 821. Moreover, the liquid cooling fins 835 are provided on an outer side of the unit liquid-cooling portion 821. In the configuration, the heat applied from the refrigerant RF to the unit liquid-cooling portion 821 is easily dissipated to the outside from the liquid cooling fins 835. Therefore, an effect of cooling the unit housing 101 by the refrigerant RF can be further enhanced by the liquid cooling fins 835.

According to the present embodiment, the air cooling fins 836 are aligned with the liquid cooling fins 835 along the unit outer surface 101os, and dissipate the heat of the unit housing 101. In the configuration, in the unit housing 101, accumulation of the heat in a portion such as the unit air-cooling portion 822 to which the cooling effect of the refrigerant RF is less likely to be imparted can be limited by the air cooling fins 836. Therefore, a decrease in an effect of cooling a portion in the unit housing 101 which is not the unit liquid-cooling portion 821 can be reduced by the air cooling fins 836.

Further, in the configuration, the heat of the motor device 60 and the inverter device 80 being dissipated to the outside from the liquid cooling fins 835 passing through the refrigerant RF and the heat being dissipated to the outside from the air cooling fins 836 without passing through the refrigerant RF are both realized. Therefore, in the EPU 50, the liquid cooling fins 835 and the air cooling fins 836 can be selectively used depending on an object to be cooled. Accordingly, the output density of the EPU 50 can be finely optimized.

According to the present embodiment, the liquid cooling fins 835 and the air cooling fins 836 are arranged in the axial direction AD along the unit outer surface 101os. In the configuration, for example, when a gas flows as the external air Fo in the axial direction AD along the unit outer surface 101os, the external air Fo tends to flow along both the liquid cooling fins 835 and the air cooling fins 836. In this case, the external air Fo can promote dissipation of the heat from each of the liquid cooling fins 835 and the air cooling fins 836. Therefore, by enhancing a heat dissipation effect of the liquid cooling fins 835 and the air cooling fins 836, the liquid cooling fins 835 and the air cooling fins 836 can be reduced in size and number while maintaining the effect of cooling the EPU 50. The liquid cooling fins 835 and the air cooling fins 836 are reduced in size and number, thus the EPU 50 is reduced in weight, and therefore the output density of the EPU 50 can be improved.

In the configuration, the external air Fo can be shared by the liquid cooling fins 835 and the air cooling fins 836. Therefore, the liquid cooling fins 835 and the air cooling fins 836 can be cooled collectively and efficiently by the external air Fo. Accordingly, a loss of the external air Fo with respect to the liquid cooling fins 835 and the air cooling fins 836 can be reduced. By reducing the loss of the external air Fo in this way, the reduction in size and number of the liquid cooling fins 835 and the air cooling fins 836 can be realized.

### <Second Embodiment>

In the first embodiment described above, the motor unit 100 includes the air cooling fins 836. Meanwhile, in a second embodiment, the motor unit 100 does not include the air cooling fins 836. Configurations, operations, and effects not particularly described in the second embodiment are the same as those in the first embodiment described above. In the second embodiment, differences from the first embodiment will be mainly described.

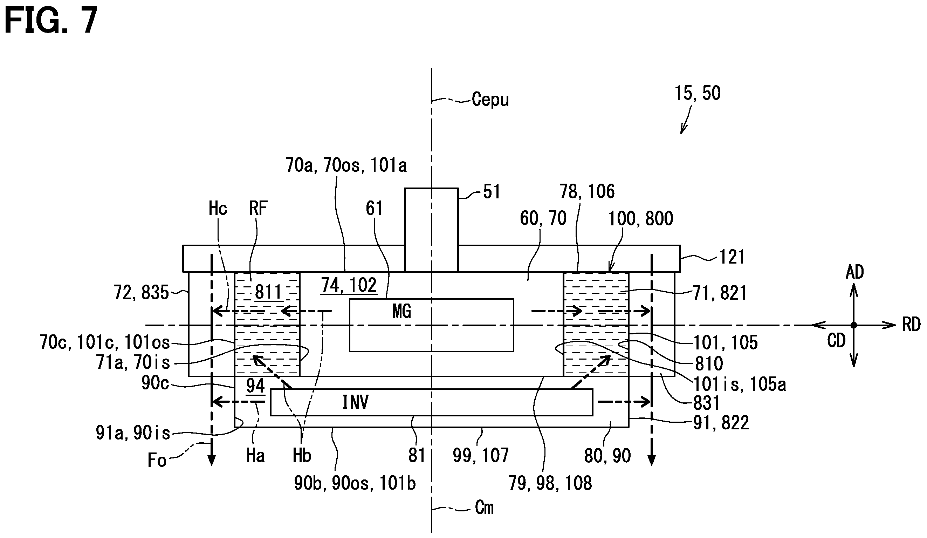

As shown in FIG. 7, the motor unit 100 includes the motor fins 72 and the liquid cooling fins 835, but does not include the inverter fins 92 and the air cooling fins 836. The outer peripheral wall fins 831 include the motor fins 72 and the liquid cooling fins 835, but do not include the inverter fins 92 and the air cooling fins 836. The outer peripheral wall fins 831 are provided on the motor outer peripheral wall surface 70c, but are not provided on the inverter outer peripheral wall surface 90c. In the present embodiment, the heat transferred to the unit air-cooling portion 822 in the inverter device 80 is directly dissipated as the heat Hb to the outside from the unit air-cooling portion 822 without passing through the air cooling fins 836.

### <Third Embodiment>

In the first embodiment described above, the motor device 60 is provided on the upwind side of the external air Fo with respect to the inverter device 80. Meanwhile, in a third embodiment, the motor device 60 is provided on the downwind side. Configurations, operations, and effects not particularly described in the third embodiment are the same as those in the first embodiment. In the third embodiment, differences from the first embodiment will be mainly described.

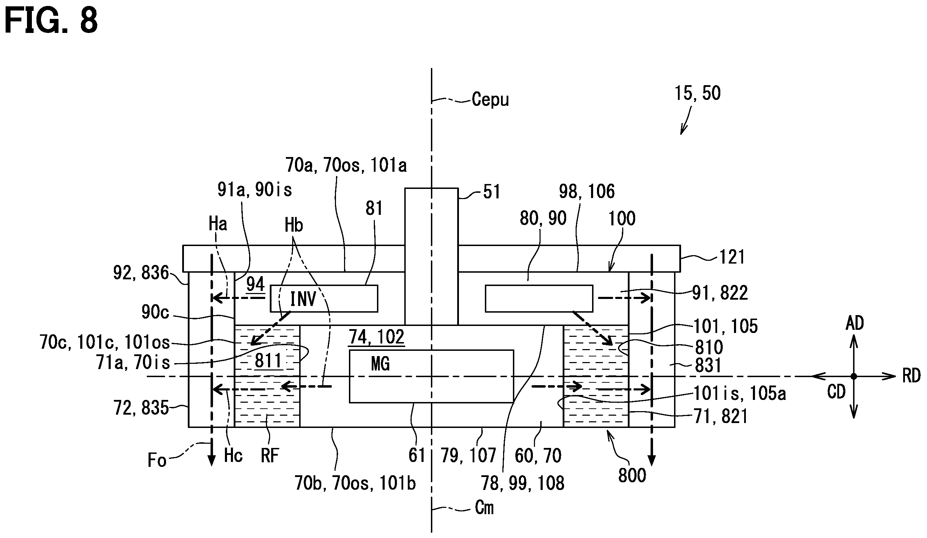

As shown in FIG. 8, the motor device 60 is located on the downwind side of the external air Fo with respect to the inverter device 80. In the axial direction AD, the inverter device 80 is provided between the motor device 60 and the propeller 20. The unit liquid-cooling portion 821 and the liquid cooling fins 835 are located on the downwind side of the external air Fo with respect to the unit air-cooling portion 822 and the air cooling fins 836. The motor outer peripheral wall 71 and the motor fins 72 are located on the downwind side of the external air Fo with respect to the inverter outer peripheral wall 91 and the inverter fins 92.

### <Fourth Embodiment>

In the first embodiment described above, the motor outer peripheral passage 811 in the refrigerant passage 810 is provided on the outer peripheral side of the motor device 60. Meanwhile, in a fourth embodiment, the refrigerant passage 810 is provided on the outer peripheral side of the inverter device 80. Configurations, operations, and effects not particularly described in the fourth embodiment are the same as those in the first embodiment. In the fourth embodiment, differences from the first embodiment will be mainly described.

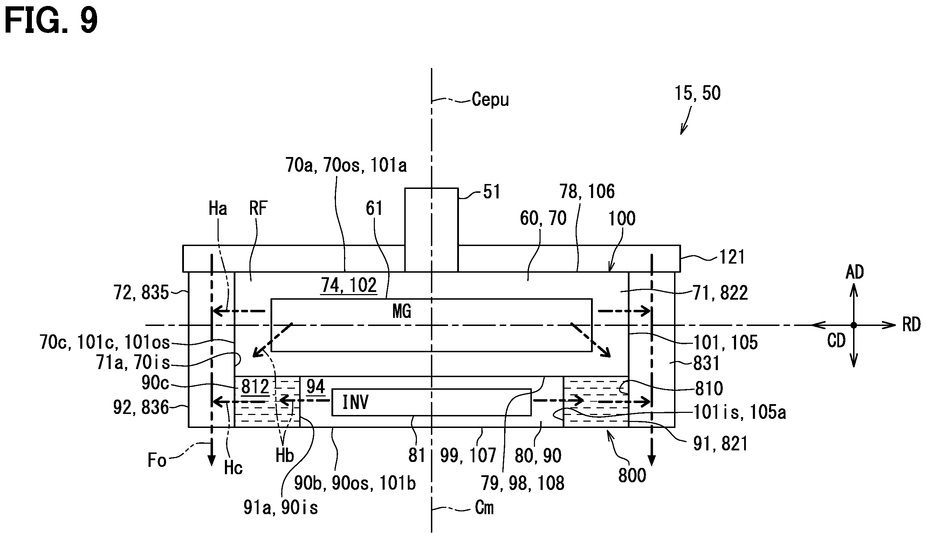

As shown in FIG. 9, the refrigerant passage 810 includes an inverter outer peripheral passage 812. The inverter outer peripheral passage 812 is provided to cover the inverter 81 from the outer peripheral side. For example, the inverter outer peripheral passage 812 is provided at a position covering the arm switch units 530 from the outer peripheral side. The inverter outer peripheral passage 812 is a jacket for the inverter 81. The inverter outer peripheral passage 812 is formed in an annular shape to extend in the circumferential direction CD. The inverter outer peripheral passage 812 is provided in the inverter housing 90. On the other hand, the inverter outer peripheral passage 812 is not provided in the motor housing 70.

The inverter outer peripheral passage 812 extends along the unit outer surface 101os such that the refrigerant RF flows along the unit outer surface 101os. The inverter outer peripheral passage 812 corresponds to the outer surface passage. The inverter outer peripheral passage 812 is built in the unit housing 101. The inverter outer peripheral passage 812 is provided on an inner side of the unit outer surface 101os in the unit housing 101. The inverter outer peripheral passage 812 corresponds to the built-in passage. The inverter outer peripheral passage 812 is provided in the unit housing 101 between the unit outer surface 101os and the unit inner surface 101is.

In the present embodiment, the inverter outer peripheral passage 812 is included in the inverter device 80. The inverter outer peripheral passage 812 extends along the inverter housing outer surface 90os such that the refrigerant RF flows along the inverter housing outer surface 90os. The inverter outer peripheral passage 812 is built in the inverter housing 90. The inverter outer peripheral passage 812 is provided in the inverter housing 90 between the inverter housing outer surface 90os and the inverter housing inner surface 90is.

The inverter outer peripheral passage 812 extends along the inverter outer peripheral wall surface 90c such that the refrigerant RF flows along the inverter outer peripheral wall surface 90c. The inverter outer peripheral passage 812 is built in the inverter outer peripheral wall 91. The inverter outer peripheral passage 812 extends in the axial direction AD to span the inverter upstream wall 98 and the inverter downstream wall 99. The inverter outer peripheral passage 812 is provided in the inverter outer peripheral wall 91 between the inverter outer peripheral wall surface 90c and the inverter inner wall surface 91a.

In the present embodiment, the inverter outer peripheral passage 812 is formed by the unit liquid-cooling portion 821. The unit liquid-cooling portion 821 is included in the inverter housing 90. The unit liquid-cooling portion 821 includes at least a part of the inverter outer peripheral wall 91. For example, the inverter outer peripheral wall 91 is the unit liquid-cooling portion 821.

In the present embodiment, the liquid cooling fin 835 is at least a part of the inverter fin 92. For example, the inverter fin 92 is the liquid cooling fin 835. As the liquid cooling fins 835, the inverter fins 92 dissipate, to the outside, the heat of the refrigerant RF flowing inside the inverter outer peripheral wall 91.

The inverter outer peripheral passage 812 is provided at a position aligned with both the motor device 60 and the inverter device 80 in a direction orthogonal to the circumferential direction CD. The inverter outer peripheral passage 812 corresponds to the common passage. In the radial direction RD which is a direction among directions orthogonal to the circumferential direction CD, the inverter outer peripheral passage 812 and the inverter device 80 are arranged. In the present embodiment, the inverter outer peripheral passage 812 is located on the radially outer side of the inverter housing 90, and thus the inverter outer peripheral passage 812 and the inverter device 80 are arranged in the radial direction RD. The inverter outer peripheral passage 812 is provided on the outer peripheral side of the inverter device 80. The inverter outer peripheral passage 812 is aligned with the inverter housing inner surface 90is in the radial direction RD. The refrigerant RF flowing through the inverter outer peripheral passage 812 cools the inverter device 80 from the radially outer side. For example, the refrigerant RF flowing through the inverter outer peripheral passage 812 cools the arm switch units 530 from the outer peripheral side.

In the axial direction AD which is a direction among directions orthogonal to the circumferential direction CD, the inverter outer peripheral passage 812 and the motor device 60 are arranged. The inverter outer peripheral passage 812 is provided between the motor housing inner surface 70is and the inverter downstream wall surface 90b in the axial direction AD. Since the inverter outer peripheral wall 91 includes the unit liquid-cooling portion 821, the inverter inner wall surface 91a is provided on the radially inner side with respect to the motor inner wall surface 71a in the radial direction RD. At least a part of the inverter outer peripheral passage 812 is on the radially inner side with respect to the motor inner wall surface 71a. The refrigerant RF flowing through the inverter outer peripheral passage 812 cools the motor device 60 from a side facing the motor downstream wall surface 70b.

The unit air-cooling portion 822 is included in the motor housing 70. The unit air-cooling portion 822 is at least a part of the motor outer peripheral wall 71. For example, the motor outer peripheral wall 71 is the unit air-cooling portion 822. In the present embodiment, the air cooling fin 836 is at least a part of the motor fin 72. For example, the motor fin 72 is the air cooling fin 836. As the air cooling fins 836, the motor fins 72 dissipate heat of the motor outer peripheral wall 71 to the outside.

As shown in FIG. 9, the heat transferred to the unit air-cooling portion 822 in the motor device 60 is dissipated to the outside from the air cooling fins 836 as the heat Ha. For example, the heat generated by the motor 61 or the like is transferred as the heat Ha from the motor space 74 to the motor outer peripheral wall 71, and then is dissipated to the outside from the motor fins 72.

For example, the heat generated by the arm switch units 530 or the like is transferred as the heat Hb from the inverter space 94 to the refrigerant RF. The heat generated by the motor coil 211 or the like is transferred as the heat Hb from the motor space 74 to the refrigerant RF. The heat Hb transferred to the refrigerant RF is transferred as the heat Hc to the inverter fins 92 from the refrigerant RF in the inverter outer peripheral wall 91, and is dissipated to the outside from the inverter fins 92.

In the present embodiment, when the refrigerant pump 801 is driven, the refrigerant RF circulates through the refrigerant passage 810 to pass through the inverter outer peripheral passage 812. In the inverter outer peripheral passage 812, the refrigerant RF circulates in the circumferential direction CD.

According to the present embodiment, the inverter outer peripheral passage 812 is arranged on the motor device 60 in the axial direction AD and is provided on the outer peripheral side of the inverter device 80. In the configuration, it is not necessary to provide the inverter outer peripheral passage 812 on the outer peripheral side of the motor device 60. Therefore, for example, as compared with a configuration in which the inverter outer peripheral passage 812 is provided on the outer peripheral side of the motor device 60, the inverter outer peripheral passage 812 can be shortened in the circumferential direction CD. As described above, by shortening the inverter outer peripheral passage 812, the EPU 50 can be reduced in weight, and the output density of the EPU 50 can be improved.

In the present embodiment, by arranging the inverter outer peripheral passage 812 on a part of the motor device 60 in the axial direction AD, a cooling effect of the inverter outer peripheral passage 812 on the motor device 60 may be lower than a cooling effect of the inverter outer peripheral passage 812 on the inverter device 80. On the other hand, as described above, the EPU 50 can be reduced in weight by shortening the inverter outer peripheral passage 812. In this way, the EPU 50 is reduced in weight without greatly reducing the cooling effect of the inverter outer peripheral passage 812 on the motor device 60, and thus the output density of the EPU 50 can be improved.

### <Fifth Embodiment>

In the fourth embodiment described above, the inverter device 80 is provided on the downwind side of the external air Fo with respect to the motor device 60. Meanwhile, in a fifth embodiment, the inverter device 80 is provided on the upwind side of the external air Fo with respect to the motor device 60. Configurations, operations, and effects not particularly described in the fifth embodiment are the same as those in the fourth embodiment. In the fifth embodiment, differences from the fourth embodiment will be mainly described.

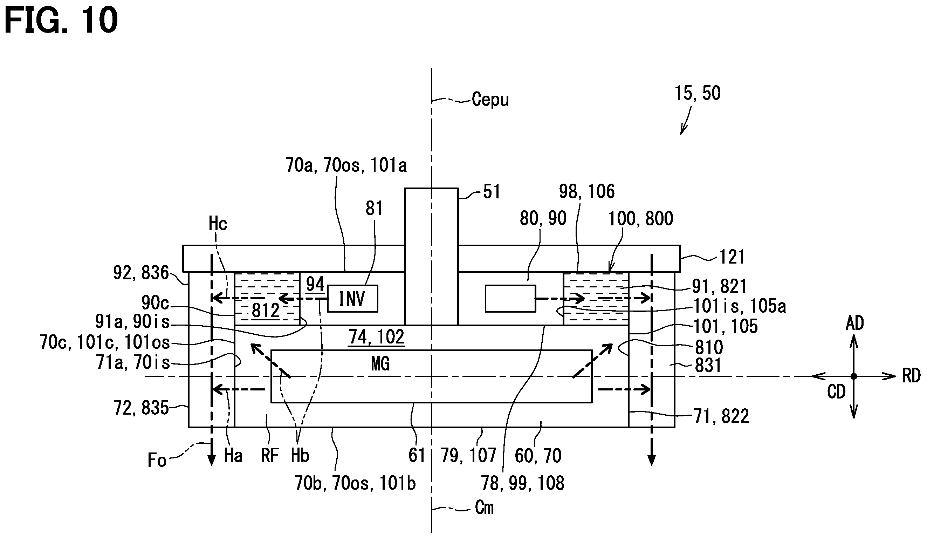

As shown in FIG. 10, the inverter device 80 is located on the upwind side of the external air Fo with respect to the motor device 60. In the axial direction AD, the inverter device 80 is provided between the motor device 60 and the propeller 20, as in the third embodiment. The unit liquid-cooling portion 821 and the liquid cooling fins 835 are located on the upwind side of the external air Fo with respect to the unit air-cooling portion 822 and the air cooling fins 836. The inverter outer peripheral wall 91 and the inverter fins 92 are located on the upwind side of the external air Fo with respect to the motor outer peripheral wall 71 and the motor fins 72.

### <Sixth Embodiment>

In the fifth embodiment described above, the motor unit 100 includes the air cooling fins 836. Meanwhile, in a sixth embodiment, the motor unit 100 does not include the air cooling fins 836. Configurations, operations, and effects not particularly described in the sixth embodiment are the same as those of the fifth embodiment described above. In the sixth embodiment, differences from the fifth embodiment described above will be mainly described.

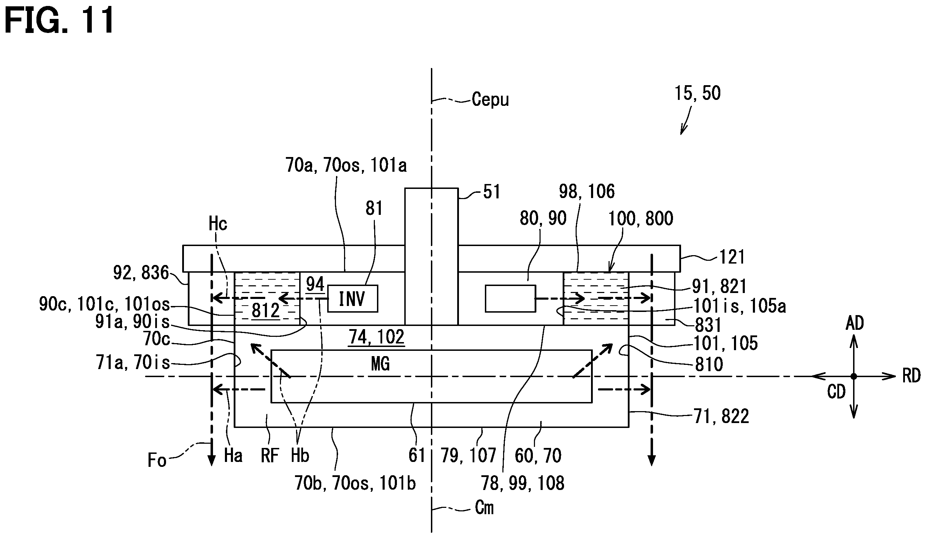

In the present embodiment, as in the second embodiment, the motor unit 100 includes the motor fins 72 and the liquid cooling fins 835, but does not include the inverter fins 92 and the air cooling fins 836. As shown in FIG. 11, the outer peripheral wall fins 831 include the inverter fins 92 and the liquid cooling fins 835, but do not include the motor fins 72 and the air cooling fins 836. The outer peripheral wall fins 831 are provided on the inverter outer peripheral wall surface 90c, but are not provided on the motor outer peripheral wall surface 70c. In the present embodiment, the heat transferred to the unit air-cooling portion 822 in the motor device 60 is directly dissipated as the heat Hb to the outside from the unit air-cooling portion 822 without passing through the air cooling fins 836.

### <Seventh Embodiment>

In the first embodiment described above, the motor outer peripheral passage 811 is provided on the outer peripheral side of the motor device 60, and in the fourth embodiment described above, the inverter outer peripheral passage 812 is provided on the outer peripheral side of the inverter device 80. Meanwhile, in a seventh embodiment, the refrigerant passage 810 is provided on the outer peripheral side of both the motor device 60 and the inverter device 80. Configurations, operations, and effects not particularly described in the seventh embodiment are the same as those in the first embodiment described above. In the seventh embodiment, differences from the first embodiment will be mainly described.

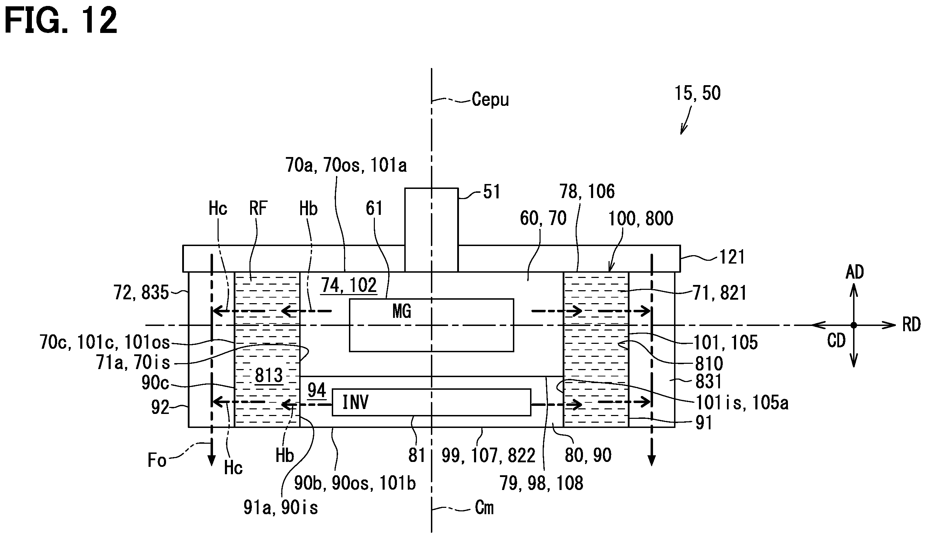

As shown in FIG. 12, the refrigerant passage 810 includes a common outer peripheral passage 813. The common outer peripheral passage 813 is provided to cover both the motor 61 and the inverter 81 from the outer peripheral side. For example, the common outer peripheral passage 813 is provided at a position covering both the motor coil 211 and the arm switch units 530 from the outer peripheral side. The common outer peripheral passage 813 is a jacket for both the motor 61 and the inverter 81. The common outer peripheral passage 813 is formed in an annular shape to extend in the circumferential direction CD. The common outer peripheral passage 813 is provided in both the motor housing 70 and the inverter housing 90. The common outer peripheral passage 813 spans the motor housing 70 and the inverter housing 90.

The common outer peripheral passage 813 is provided at a position covering the motor coil 211 from the outer peripheral side. The common outer peripheral passage 813 extends along the outer peripheral surface of the motor coil 211. The common outer peripheral passage 813 can cool at least the motor coil 211 of the motor 61. The common outer peripheral passage 813 cools the motor coil 211 from the outer peripheral side. The common outer peripheral passage 813 corresponds to the coil cooling passage.

The common outer peripheral passage 813 extends along the unit outer surface 101os such that the refrigerant RF flows along the unit outer surface 101os. The common outer peripheral passage 813 corresponds to the outer surface passage. The common outer peripheral passage 813 is built in the unit housing 101. The common outer peripheral passage 813 is provided on an inner side of the unit outer surface 101os in the unit housing 101. The common outer peripheral passage 813 corresponds to the built-in passage. The common outer peripheral passage 813 is provided in the unit housing 101 between the unit outer surface 101os and the unit inner surface 101is.

In the present embodiment, the common outer peripheral passage 813 is included in both the motor device 60 and the inverter device 80. The common outer peripheral passage 813 extends along the motor housing outer surface 70os and the inverter housing outer surface 90os such that the refrigerant RF flows along both the motor housing outer surface 70os and the inverter housing outer surface 90os. The common outer peripheral passage 813 is built in the motor housing 70 and the inverter housing 90. The common outer peripheral passage 813 is provided in the motor housing 70 between the motor housing outer surface 70os and the inverter housing outer surface 90os. The common outer peripheral passage 813 is provided in the inverter housing 90 between the inverter housing outer surface 90os and the inverter housing inner surface 90is.

The common outer peripheral passage 813 extends along both the motor outer peripheral wall surface 70c and the inverter outer peripheral wall surface 90c such that the refrigerant RF flows along both the motor outer peripheral wall surface 70c and the inverter outer peripheral wall surface 90c. The common outer peripheral passage 813 is built in both the motor outer peripheral wall 71 and the inverter outer peripheral wall 91. The common outer peripheral passage 813 extends across a boundary between the motor outer peripheral wall 71 and the inverter outer peripheral wall 91 in the axial direction AD. The common outer peripheral passage 813 extends in the axial direction AD to span the upstream plate 106 and the downstream plate 107. For example, the common outer peripheral passage 813 spans the motor upstream wall 78 and the inverter downstream wall 99.

The common outer peripheral passage 813 is provided in the motor outer peripheral wall 71 between the motor outer peripheral wall surface 70c and the motor inner wall surface 71a. The common outer peripheral passage 813 is provided in the inverter outer peripheral wall 91 between the inverter outer peripheral wall surface 90c and the inverter inner wall surface 91a.

In the present embodiment, the common outer peripheral passage 813 is formed by the unit liquid-cooling portion 821. The unit liquid-cooling portion 821 is included in both the motor housing 70 and the inverter housing 90. The unit liquid-cooling portion 821 includes at least a part of the motor outer peripheral wall 71 and at least a part of the inverter outer peripheral wall 91. For example, both the motor outer peripheral wall 71 and the inverter outer peripheral wall 91 are the unit liquid-cooling portion 821. In the present embodiment, the motor unit 100 does not include the unit air-cooling portion 822.

In the present embodiment, the liquid cooling fin 835 is at least a part of the motor fin 72 and is at least a part of the inverter fin 92. For example, both the motor fin 72 and the inverter fin 92 are the liquid cooling fin 835. As the liquid cooling fins 835, the motor fins 72 and the inverter fins 92 dissipate, to the outside, the heat of the refrigerant RF flowing inside the motor outer peripheral wall 71 and the inverter outer peripheral wall 91. In the present embodiment, the motor unit 100 does not include the air cooling fins 836.

The common outer peripheral passage 813 is provided at a position aligned with both the motor device 60 and the inverter device 80 in a direction orthogonal to the circumferential direction CD. The common outer peripheral passage 813 corresponds to the common passage. The common outer peripheral passage 813 is arranged on both the motor device 60 and the inverter device 80 in the radial direction RD which is a direction among directions orthogonal to the circumferential direction CD. In the present embodiment, since the common outer peripheral passage 813 is located on the radially outer side with respect to both the motor housing 70 and the inverter housing 90, the common outer peripheral passage 813 is arranged on both the motor device 60 and the inverter device 80 in the radial direction RD. The common outer peripheral passage 813 is provided on the outer peripheral side of both the motor device 60 and the inverter device 80.

The common outer peripheral passage 813 is arranged on both the motor housing inner surface 70is and the inverter housing inner surface 90is in the radial direction RD. The refrigerant RF flowing through the common outer peripheral passage 813 cools the motor device 60 and the inverter device 80 from the radially outer side. For example, the refrigerant RF flowing through the common outer peripheral passage 813 cools the motor coil 211 and the arm switch units 530 from the outer peripheral side.

As shown in FIG. 12, in each of the motor device 60 and the inverter device 80, the heat transferred to the unit liquid-cooling portion 821 is applied to the refrigerant RF as the heat Hb. For example, the heat generated by the motor coil 211 and the arm switch units 530 or the like is transferred as the heat Hb from the motor space 74 and the inverter space 94 to the refrigerant RF. The heat Hb transferred to the refrigerant RF is transferred as the heat Hc to the motor fins 72 and the inverter fins 92 from the refrigerant RF in the motor outer peripheral wall 71 and the inverter outer peripheral wall 91, and is dissipated to the outside from the motor fins 72 and the inverter fins 92.

In the present embodiment, when the refrigerant pump 801 is driven, the refrigerant RF circulates through the refrigerant passage 810 to pass through the common outer peripheral passage 813. In the common outer peripheral passage 813, the refrigerant RF circulates in the circumferential direction CD.

According to the present embodiment, the common outer peripheral passage 813 extends in the axial direction AD to span the motor device 60 and the inverter device 80, and is provided on the outer peripheral side of each of the motor device 60 and the inverter device 80. In the configuration, a cooling effect of the common outer peripheral passage 813 on the motor device 60 and a cooling effect of the common outer peripheral passage 813 on the inverter device 80 are less likely to vary. That is, the cooling effect of the common outer peripheral passage 813 on one of the motor device 60 and the inverter device 80 can be prevented from being insufficient. By preventing the insufficiency of the cooling effect for both the motor device 60 and the inverter device 80 in this way, the output density of the EPU 50 can be improved.

In the present embodiment, since both the motor device 60 and the inverter device 80 are cooled from the outer peripheral side by the common outer peripheral passage 813, a heat dissipation amount can be sufficiently secured for both the motor device 60 and the inverter device 80. Accordingly, the output can be improved without increasing sizes of the motor device 60 and the inverter device 80, and the output density can be improved.

### <Eighth Embodiment>

In the seventh embodiment described above, the refrigerant passage 810 is provided such that the refrigerant RF flows on the outer peripheral side of the motor device 60 and the inverter device 80. Meanwhile, in an eighth embodiment, the refrigerant passage 810 is provided such that the refrigerant RF flows between the motor device 60 and the inverter device 80. Configurations, operations, and effects not particularly described in the eighth embodiment are the same as those in the seventh embodiment described above. In the eighth embodiment, differences from the seventh embodiment described above will be mainly described.

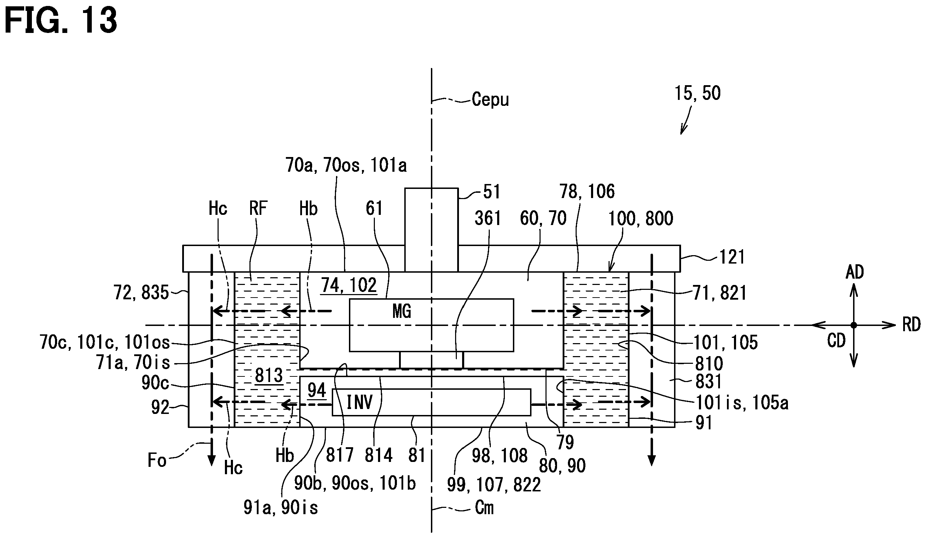

As shown in FIG. 13, the refrigerant passage 810 includes an axially interposed passage 814 in addition to the common outer peripheral passage 813. The axially interposed passage 814 is provided between the motor 61 and the inverter 81 in the axial direction AD. The axially interposed passage 814 extends in a direction orthogonal to the axial direction AD. The axially interposed passage 814 extends along both the motor housing inner surface 70is and the inverter housing inner surface 90is such that the refrigerant RF flows along both the motor housing inner surface 70is and the inverter housing inner surface 90is.

The axially interposed passage 814 is provided in the partition plate 108 to extend along the partition plate 108. The axially interposed passage 814 is built in the partition plate 108. The axially interposed passage 814 extends along a boundary portion between the motor housing 70 and the inverter housing 90. For example, the axially interposed passage 814 is built in at least one of the motor downstream wall 79 and the inverter upstream wall 98. The unit liquid-cooling portion 821 includes at least a part of the partition plate 108. For example, the partition plate 108 is the unit liquid-cooling portion 821.

The axially interposed passage 814 is provided at a position aligned with both the motor device 60 and the inverter device 80 in a direction orthogonal to the circumferential direction CD. The axially interposed passage 814 corresponds to the common passage. The axially interposed passage 814 is arranged on both the motor device 60 and the inverter device 80 in the axial direction AD which is a direction among directions orthogonal to the circumferential direction CD. In the present embodiment, since the axially interposed passage 814 is located between the motor housing 70 and the inverter housing 90 in the axial direction AD, the axially interposed passage 814 is arranged on both the motor device 60 and the inverter device 80 in the axial direction AD.

The axially interposed passage 814 is arranged on both the motor housing inner surface 70is and the inverter housing inner surface 90is in the axial direction AD. The axially interposed passage 814 cools the motor device 60 and the inverter device 80 in the axial direction AD. For example, the axially interposed passage 814 cools the motor device 60 from the downwind side of the external air Fo. Further, the axially interposed passage 814 cools the inverter device 80 from the upwind side of the external air Fo.

The partition plate 108 supports the downstream bearing 361. The downstream bearing 361 corresponds to a bearing portion. The partition plate 108 corresponds to a bearing support portion. The axially interposed passage 814 cools the partition plate 108 by being built in the partition plate 108. The axially interposed passage 814 corresponds to a support-portion cooling passage.

The axially interposed passage 814 is connected to the common outer peripheral passage 813. The axially interposed passage 814 is provided on the radially inner side of the common outer peripheral passage 813. An outer peripheral end of the axially interposed passage 814 is connected to an inner peripheral end of the common outer peripheral passage 813. In the refrigerant passage 810, the refrigerant RF circulates to flow through both the common outer peripheral passage 813 and the axially interposed passage 814.

According to the present embodiment, the partition plate 108 supporting the downstream bearing 361 is cooled by the axially interposed passage 814. In the configuration, heat of the partition plate 108 is easily dissipated to the refrigerant RF flowing through the axially interposed passage 814. Therefore, accumulation of the heat in the partition plate 108 can be limited by the axially interposed passage 814.

In the configuration in which the partition plate 108 holds the downstream bearing 361 as a bearing holding member, the partition plate 108 is inevitably made thick in order to obtain high strength, and therefore is large in volume. When the partition plate 108 is large in volume, a thermal mass of the partition plate 108 increases. Therefore, in the motor unit 100, even when a motor load temporarily increases, the heat of the motor coil 211 can be absorbed by the partition plate 108. Accordingly, since the thermal mass of the partition plate 108 is large, a temporary increase in the temperature of the motor coil 211 can be prevented. The thermal mass is a volume capable of absorbing heat.

Moreover, in the present embodiment, since the partition plate 108 is cooled by the axially interposed passage 814, the heat absorbed by the partition plate 108 from the motor coil 211 is easily dissipated to the refrigerant RF. Even if a temperature of the partition plate 108 increases with a temporary increase in the motor load, the temperature of the partition plate 108 can be quickly lowered by the axially interposed passage 814. Therefore, even if a temporary increase in the motor load occurs repeatedly, the axially interposed passage 814 can prevent a function of the partition plate 108 as the thermal mass from deteriorating.

The refrigerant passage 810 may include a motor outer peripheral passage 811 and an inverter outer peripheral passage 812 in addition to the axially interposed passage 814. For example, the axially interposed passage 814 may be connected to the motor outer peripheral passage 811 or the inverter outer peripheral passage 812. The axially interposed passage 814 may not be built in the partition plate 108 as long as the axially interposed passage 814 can cool the partition plate 108. For example, a forming portion that forms the axially interposed passage 814 may be attached to the partition plate 108.

The upstream plate 106 supports the upstream bearing 360. Therefore, the support-portion cooling passage for cooling the upstream plate 106 may be provided with the upstream bearing 360 as the bearing portion and the upstream plate 106 as the bearing support portion. The support-portion cooling passage may be built in the upstream plate 106, for example.

### <Ninth Embodiment>

In the first embodiment described above, the motor device 60 and the inverter device 80 are arranged in the axial direction AD. Meanwhile, in a ninth embodiment, the motor device 60 and the inverter device 80 are arranged in the radial direction RD. Configurations, operations, and effects not particularly described in the ninth embodiment are the same as those of the first embodiment. In the ninth embodiment, differences from the first embodiment will be mainly described.

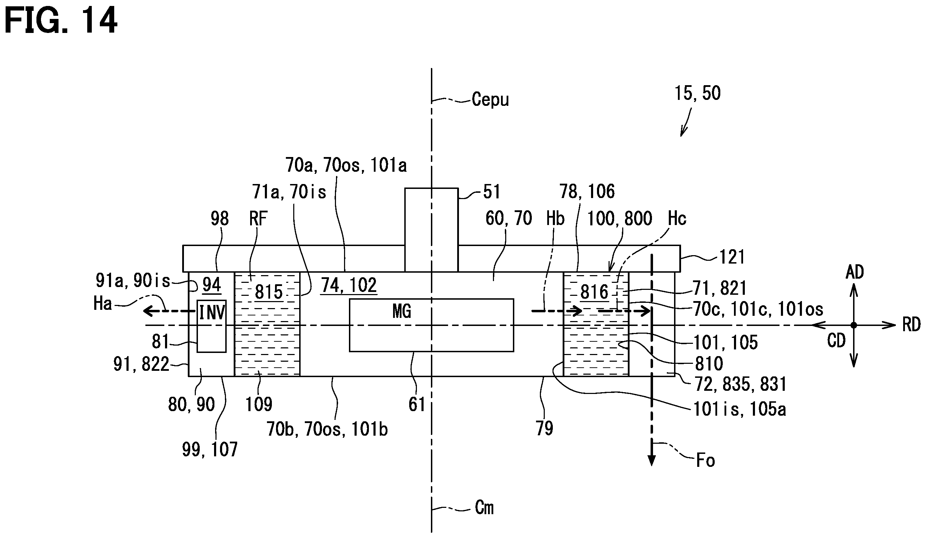

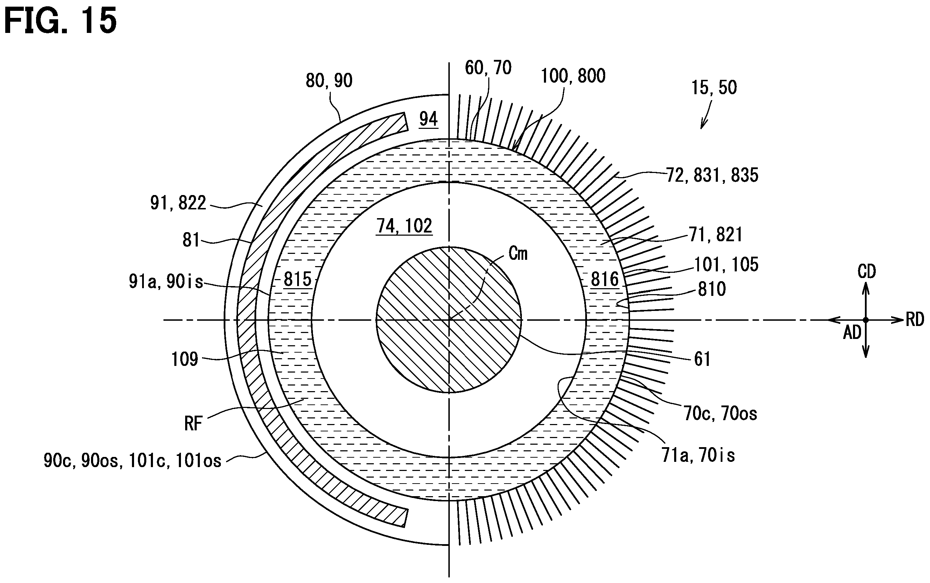

As shown in FIGS. 14 and 15, the inverter device 80 is provided on the outer peripheral side of the motor device 60. The inverter device 80 extends in the circumferential direction CD along the motor outer peripheral wall 71. In the unit housing 101, the motor housing 70 and the inverter housing 90 are arranged in the radial direction RD. On the outer peripheral side of the motor housing 70, the inverter housing 90 and the motor fins 72 are arranged in the circumferential direction CD. For example, on the outer peripheral side of the motor housing 70, one inverter housing 90 extends in the circumferential direction CD along the motor outer peripheral wall 71. In a region where the inverter housing 90 is not provided on the outer peripheral side of the motor housing 70, the multiple motor fins 72 are arranged in the circumferential direction CD.

The unit housing 101 includes a radial partition wall 109. The radial partition wall 109 partitions the unit space 102 in the radial direction RD. The radial partition wall 109 extends in a direction orthogonal to the radial direction RD. In the unit space 102, the motor space 74 and the inverter space 94 are arranged in the radial direction RD. The radial partition wall 109 is provided between the motor space 74 and the inverter space 94, and separates the motor space 74 and the inverter space 94. The radial partition wall 109 forms at least a part of the motor housing 70 and the inverter housing 90. For example, the radial partition wall 109 forms at least a part of the motor outer peripheral wall 71.

The refrigerant passage 810 includes a radially interposed passage 815 and an interposed extension passage 816. The radially interposed passage 815 and the interposed extension passage 816 are provided on the outer peripheral side of the motor device 60, as the motor outer peripheral passage 811 of the first embodiment. The radially interposed passage 815 and the interposed extension passage 816 extend in the circumferential direction CD. Each of the radially interposed passage 815 and the interposed extension passage 816 extends in the axial direction AD to span the motor upstream wall 78 and the motor downstream wall 79. The radially interposed passage 815 and the interposed extension passage 816 are arranged in the circumferential direction CD. The radially interposed passage 815 and the interposed extension passage 816 are connected to each other. The interposed extension passage 816 extends from the radially interposed passage 815 in the circumferential direction CD.

The radially interposed passage 815 and the interposed extension passage 816 are provided at positions covering the motor coil 211 from the outer peripheral side. The radially interposed passage 815 and the interposed extension passage 816 extend along the outer peripheral surface of the motor coil 211. The radially interposed passage 815 and the interposed extension passage 816 are capable of cooling the motor coil 211 at least in the motor 61. The radially interposed passage 815 and the interposed extension passage 816 cool the motor coil 211 from the outer peripheral side. The radially interposed passage 815 and the interposed extension passage 816 correspond to the coil cooling passage.

The radially interposed passage 815 is provided between the motor 61 and the inverter 81 in the radial direction RD. The radially interposed passage 815 extends along both the motor inner wall surface 71a and the inverter inner wall surface 91a such that the refrigerant RF flows along both the motor inner wall surface 71a and the inverter inner wall surface 91a. The interposed extension passage 816 is provided between the motor 61 and the motor fin 72 in the radial direction RD. The interposed extension passage 816 extends along the motor inner wall surface 71a such that the refrigerant RF flows along the motor inner wall surface 71a. In the refrigerant passage 810, the refrigerant RF circulates to flow through both the radially interposed passage 815 and the interposed extension passage 816.

In the present embodiment, the radially interposed passage 815 and the interposed extension passage 816 are formed by the unit liquid-cooling portion 821. In the unit liquid-cooling portion 821, a portion where the radially interposed passage 815 is formed is included in the radial partition wall 109. The radially interposed passage 815 is built in the radial partition wall 109. In the unit liquid-cooling portion 821, a portion where the interposed extension passage 816 is formed is included in the motor outer peripheral wall 71. The interposed extension passage 816 is built in the motor outer peripheral wall 71. The interposed extension passage 816 corresponds to the outer surface passage and the built-in passage. The motor fins 72 are provided as the liquid cooling fin 835 on the outer peripheral side of the interposed extension passage 816.

The radially interposed passage 815 is provided at a position aligned with both the motor device 60 and the inverter device 80 in a direction orthogonal to the circumferential direction CD. The radially interposed passage 815 corresponds to the common passage. The radially interposed passage 815 is arranged on both the motor device 60 and the inverter device 80 in the radial direction RD which is a direction among directions orthogonal to the circumferential direction CD. In the present embodiment, since the radially interposed passage 815 is located between the motor housing 70 and the inverter housing 90 in the radial direction RD, the radially interposed passage 815 is arranged on both the motor device 60 and the inverter device 80 in the radial direction RD.

According to the present embodiment, the radially interposed passage 815 is provided between the motor device 60 and the inverter device 80 in the radial direction RD. In the configuration, heat transfer between the motor device 60 and the inverter device 80 can be restricted by the radially interposed passage 815. Therefore, it is possible to prevent a situation in which heat is transferred from one of the motor device 60 and the inverter device 80 to the other and a temperature of the other is excessively high.

In the present embodiment, the radially interposed passage 815 is provided on the inner peripheral side of the inverter device 80. In the configuration, it is not necessary to provide the radially interposed passage 815 on the outer peripheral side of the inverter device 80. Further, it is not necessary to provide the radially interposed passage 815 at a position aligned with the inverter device 80 in the radial direction RD. Accordingly, the radially interposed passage 815 can be shortened in the circumferential direction CD. In this way, by shortening the radially interposed passage 815, the EPU 50 can be reduced in weight, and the output density of the EPU 50 can be improved.

In the EPU 50, it is considered that the motor device 60 tends to have a higher temperature than the inverter device 80. In this case, there is a concern that the temperature of the inverter device 80 is excessively high due to transfer of the heat of the motor device 60 to the inverter device 80. Meanwhile, in the present embodiment, before the heat of the motor device 60 is transferred to the inverter device 80, the heat of the motor device 60 is dissipated to the refrigerant RF through the radially interposed passage 815. Therefore, it is possible to prevent a situation in which the temperature of the inverter device 80 is excessively high due to the heat of the motor device 60. Further, the cooling of the inverter device 80 is promoted by the radially interposed passage 815, and thus the output density of the EPU 50 can be improved.

### <Tenth Embodiment>

In the ninth embodiment described above, the EPU 50 includes one motor housing 70 and one inverter housing 90. Meanwhile, in a tenth embodiment, the EPU 50 includes multiple inverter housings 90 for one motor housing 70. Configurations, operations, and effects not particularly described in the tenth embodiment are the same as those of the ninth embodiment. In the tenth embodiment, differences from the ninth embodiment will be mainly described.

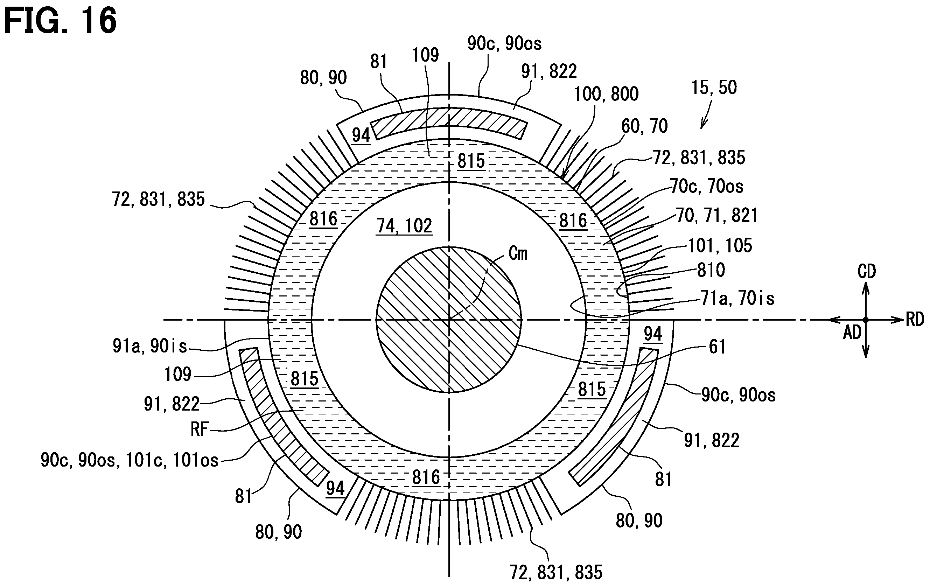

As shown in FIG. 16, multiple inverter devices 80 are provided on the outer peripheral side of the motor device 60. Multiple inverter devices 80 are arranged in the circumferential direction CD along the motor outer peripheral wall 71. Two of the inverter devices 80 adjacent to each other in the circumferential direction CD are separated from each other in the circumferential direction CD. The motor fins 72 are provided between two of the inverter devices 80 adjacent to each other in the circumferential direction CD.

In the refrigerant passage 810, multiple radially interposed passages 815 and multiple interposed extension passages 816 are arranged in the circumferential direction CD. The radially interposed passages 815 and the interposed extension passages 816 are alternately arranged in the circumferential direction CD. In the unit liquid-cooling portion 821, portions where the radially interposed passages 815 are formed and portions where the interposed extension passages 816 are formed are alternately arranged in the circumferential direction CD.

### <Eleventh Embodiment>

In the ninth embodiment described above, the inverter device 80 is not formed in an annular shape on the outer peripheral side of the motor device 60. Meanwhile, in an eleventh embodiment, the inverter device 80 is formed in an annular shape. Configurations, operations, and effects not particularly described in the eleventh embodiment are the same as those of the ninth embodiment. In the eleventh embodiment, differences from the ninth embodiment will be mainly described.

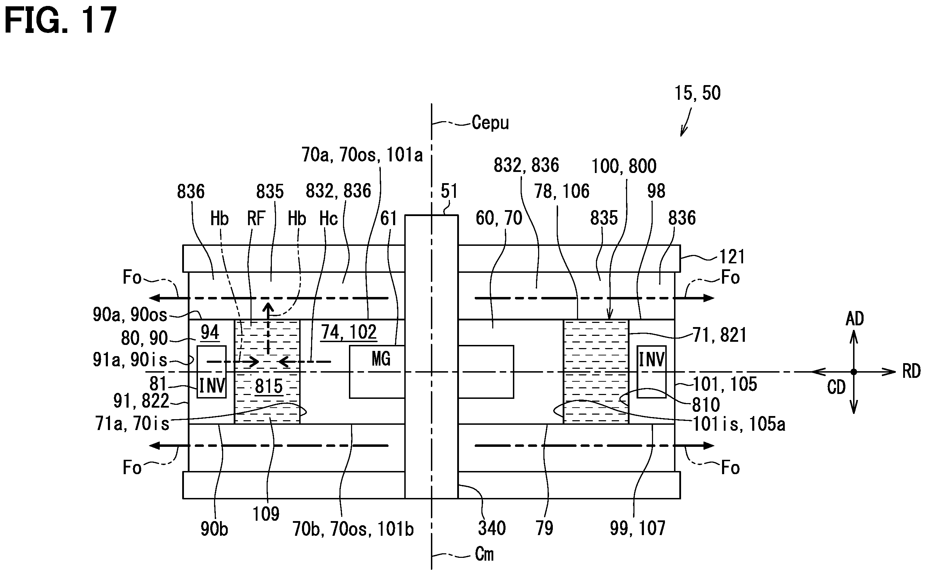

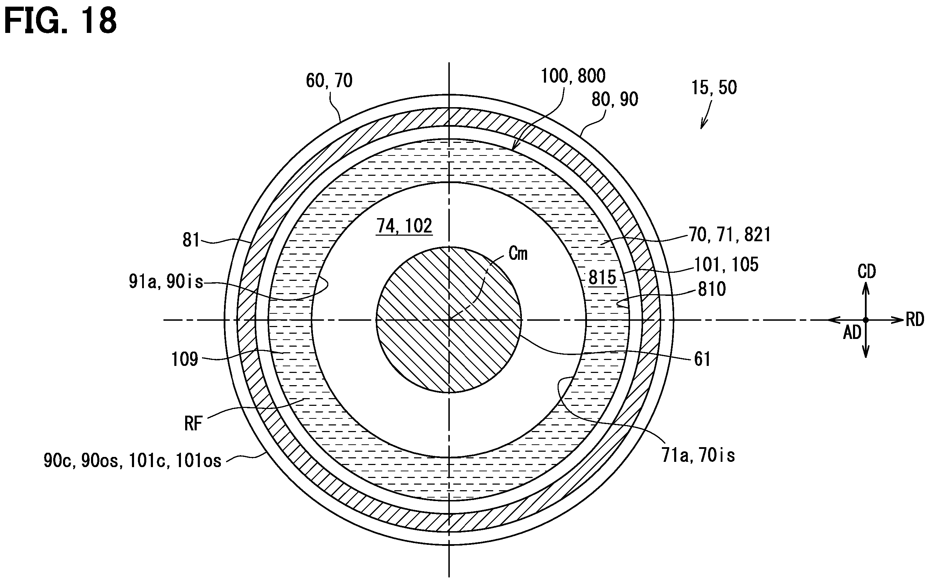

As shown in FIGS. 17 and 18, each of the inverter device 80 and the inverter housing 90 extends in an annular shape along the motor outer peripheral wall 71 in the circumferential direction CD. In the motor unit 100, each of the radially interposed passage 815, the unit liquid-cooling portion 821, and the unit air-cooling portion 822 extends in an annular shape in the circumferential direction CD together with the inverter device 80. The unit liquid-cooling portion 821 and the unit air-cooling portion 822 are included in the upstream plate 106 and the downstream plate 107. In the upstream plate 106 and the downstream plate 107, a portion aligned with the radial partition wall 109 in the axial direction AD is the unit liquid-cooling portion 821, and a portion displaced from the radial partition wall 109 in the radial direction RD is the unit air-cooling portion 822. The motor unit 100 does not include the motor fins 72 and the outer peripheral wall fins 831.

As shown in FIG. 17, the EPU 50 includes upstream wall fins 832 and downstream wall fins 833. The upstream wall fins 832 and the downstream wall fins 833 are included in the motor unit 100. The upstream wall fins 832 and the downstream wall fins 833 are heat dissipation fins, similar to the outer peripheral wall fins 831 of the first embodiment. The upstream wall fins 832 are provided on the unit upstream wall surface 101a. The downstream wall fins 833 are provided on the unit downstream wall surface 101b.

Each of the upstream wall fin 832 and the downstream wall fin 833 extends in a direction orthogonal to the circumferential direction CD. Each of the upstream wall fin 832 and the downstream wall fin 833 extends in the radial direction RD. The upstream wall fins 832 and the downstream wall fins 833 span the motor housing 70 and the inverter housing 90 in the radial direction RD with the radially interposed passage 815 interposed therebetween. Multiple upstream wall fins 832 and multiple downstream wall fins 833 are arranged in the circumferential direction CD.

Each of the upstream wall fins 832 and the downstream wall fins 833 include the liquid cooling fins 835 and the air cooling fins 836. In each of the upstream wall fins 832 and the downstream wall fins 833, portions provided in the unit liquid-cooling portion 821 are the liquid cooling fins 835, and portions provided in the unit air-cooling portion 822 are the air cooling fins 836.

In the present embodiment, the blower fans 121 are respectively provided on the upstream side and the downstream side of the motor unit 100. The blower fan 121 on the upstream side is provided such that the external air Fo flows in the radial direction RD along the upstream wall fins 832. When the blower fan 121 on the upstream side is driven, heat of the upstream wall fins 832 is dissipated toward the radially outer side together with the external air Fo. The blower fan 121 on the downstream side is provided such that the external air Fo flows in the radial direction RD along the downstream wall fins 833. When the blower fan 121 on the downstream side is driven, heat of the downstream wall fins 833 is dissipated toward the radially outer side together with the external air Fo.

### <Twelfth Embodiment>

In the first embodiment described above, the refrigerant passage 810 is not provided on the outer side of the unit housing 101. Meanwhile, in a twelfth embodiment, a part of the refrigerant passage 810 is provided on the outer side of the unit housing 101. Configurations, operations, and effects not particularly described in the twelfth embodiment are the same as those in the first embodiment. In the twelfth embodiment, differences from the first embodiment will be mainly described.

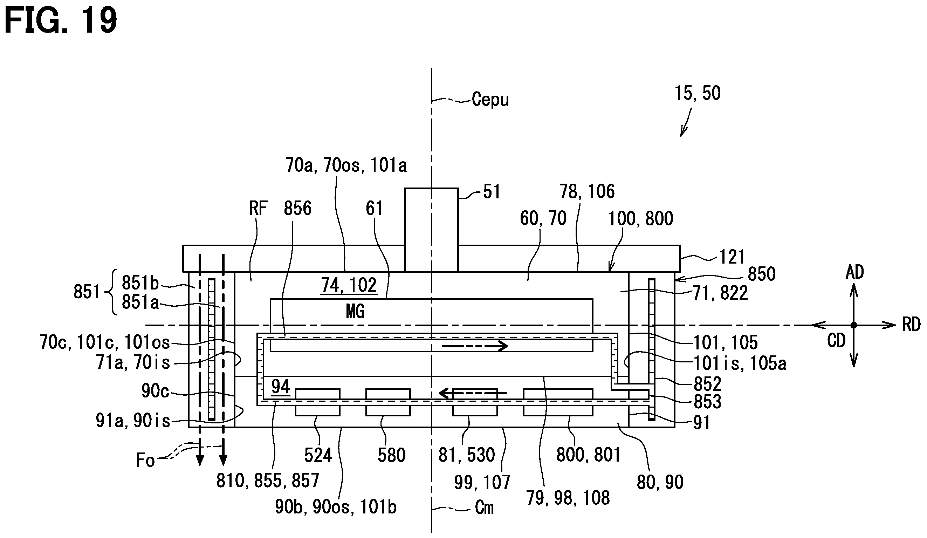

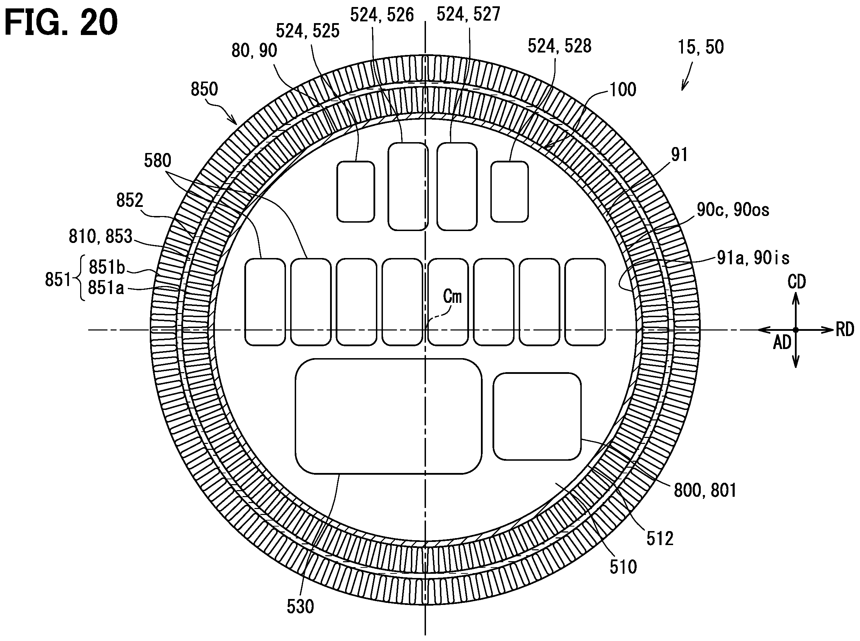

As shown in FIGS. 19 and 20, the EPU 50 includes a radiator 850. The radiator 850 is included in the cooling device 800. The radiator 850 is a heat dissipation portion for dissipating heat of the refrigerant RF to the outside. The radiator 850 is provided on the outer peripheral side of the unit housing 101. The radiator 850 extends in an annular shape in the circumferential direction CD along the unit outer surface 101os.

The radiator 850 includes radiator fins 851, a radiator pipe 852, and a radiator passage 853. The radiator fins 851 are provided on the unit outer peripheral wall surface 101c, similar to the outer peripheral wall fins 831 of the first embodiment. The radiator fins 851 are heat dissipation fins for dissipating the heat of the refrigerant RF to the outside. Each of the radiator fins 851 is made of a metal material or the like and has a thermal conduction property. The radiator fin 851 extends toward the radially outer side from the unit outer peripheral wall surface 101c. The radiator fin 851 is formed in a plate shape and extends in a direction orthogonal to the circumferential direction CD. The radiator fin 851 extends in the axial direction AD. Multiple radiator fins 851 are arranged in the circumferential direction CD. The radiator fins 851 are fixed to the unit housing 101.

The radiator pipe 852 is provided at a position separated outward from the unit outer surface 101os. The radiator pipe 852 corresponds to a separation pipe portion. The radiator pipe 852 is provided at a position separated from the unit outer peripheral wall surface 101c toward the radially outer side. The radiator pipe 852 extends in an annular shape in the circumferential direction CD along the unit outer peripheral wall surface 101c. The radiator pipe 852 is made of a metal material or the like, and has a thermal conduction property. The radiator pipe 852 penetrates the radiator fins 851 in the circumferential direction CD. The radiator pipe 852 spans the multiple radiator fins 851. The radiator pipe 852 is formed in a flat shape and extends in a direction orthogonal to the radial direction RD.

The radiator passage 853 is included in the refrigerant passage 810. The radiator passage 853 is implemented by the radiator pipe 852. The radiator passage 853 extends along the unit outer surface 101os. The radiator passage 853 corresponds to the outer surface passage. The radiator passage 853 is provided at a position separated outward from the unit outer surface 101os. The radiator passage 853 corresponds to a separation passage. The radiator passage 853 extends in a direction orthogonal to the radial direction RD. The radiator passage 853 extends in an annular shape in the circumferential direction CD along the unit outer peripheral wall surface 101c. The radiator passage 853 extends in the axial direction AD.

The radiator fins 851 dissipate the heat of the refrigerant RF flowing through the refrigerant passage 810 to the outside. The radiator fin 851 corresponds to a refrigerant fin. The radiator fins 851 support the radiator pipe 852. The radiator fin 851 corresponds to a support fin.

The radiator fins 851 include inner peripheral fins 851a and outer peripheral fins 851b. The inner peripheral fins 851a and the outer peripheral fins 851b are arranged in the radial direction RD with the radiator pipe 852 interposed therebetween. The inner peripheral fins 851a are provided on the inner peripheral side of the radiator pipe 852. Each of the inner peripheral fins 851a extends from the unit outer peripheral wall surface 101c toward the radially outer side. The inner peripheral fins 851a support the radiator pipe 852. The inner peripheral fin 851a corresponds to a support fin portion.

The outer peripheral fins 851b are provided on the outer peripheral side of the radiator pipe 852. Each of the outer peripheral fins 851b extends from the radiator pipe 852 toward the radially outer side. The outer peripheral fin 851b corresponds to an extension pin. The outer peripheral fin 851b is connected to the inner peripheral fin 851a via the radiator pipe 852. In the radiator fin 851, the inner peripheral fin 851a and the outer peripheral fin 851b may be integrally formed. The inner peripheral fin 851a and the outer peripheral fin 851b may be formed independently of each other.

As shown in FIG. 19, the refrigerant passage 810 includes an internal passage 855. The internal passage 855 is connected to the radiator passage 853. The internal passage 855 is provided such that the refrigerant RF flows inside the unit housing 101. The internal passage 855 is provided on the inner side of the unit inner surface 101is. The motor unit 100 includes the passage forming portion which forms the internal passage 855. The passage forming portion is the unit housing 101, or a piping member. The internal passage 855 is provided to cool the motor 61 and the inverter 81. The internal passage 855 is a portion in the refrigerant passage 810 which is accommodated in the unit space 102.

The internal passage 855 includes a motor passage 856 and an inverter passage 857. The motor passage 856 is a portion in the refrigerant passage 810 which cools the motor device 60. The motor passage 856 is provided on the inner side of the motor housing inner surface 70is. The motor passage 856 is a portion in the internal passage 855 which is accommodated in the motor space 74. The motor passage 856 is provided to cool the motor 61. For example, the motor passage 856 extends along the motor coil 211 to cool the motor coil 211. The motor passage 856 corresponds to the coil cooling passage.

The inverter passage 857 is a portion in the refrigerant passage 810 which cools the inverter device 80. The inverter passage 857 is provided on the inner side of the inverter housing inner surface 90is. The inverter passage 857 is a portion in the internal passage 855 which is accommodated in the inverter space 94. The inverter passage 857 is provided to cool the inverter 81. For example, the inverter passage 857 extends along the filter component 524, the arm switch unit 530, and the smoothing capacitor unit 580 to cool the filter component 524, the arm switch unit 530, and the smoothing capacitor unit 580.

In the refrigerant passage 810, the refrigerant RF circulates to flow through both the radiator passage 853 and the internal passage 855. In the internal passage 855, the refrigerant RF flows through both the motor passage 856 and the inverter passage 857. In the refrigerant passage 810, the refrigerant RF cooled in the radiator passage 853 passes through the inverter passage 857, reaches the motor passage 856, passes through the motor passage 856, and returns to the radiator passage 853. After absorbing heat in the inverter passage 857, the refrigerant RF further absorbs heat in the motor passage 856, and then dissipates heat in the radiator passage 853.

According to the present embodiment, the internal passage 855 is provided such that the refrigerant RF flows inside the unit housing 101. In the configuration, inside the unit housing 101, heat generation components such as the arm switch units 530 can be directly cooled by the refrigerant RF flowing through the internal passage 855. Therefore, heat dissipation of the heat generation components can be promoted. Moreover, since a degree of freedom related to a position of the internal passage 855 is high inside the unit housing 101, a degree of freedom related to a position where the refrigerant RF flows is also high. Therefore, the position of the internal passage 855 can be set according to the position of the heat generation component. That is, the degree of freedom related to the position of the heat generation component can be increased. For example, since the internal passage 855 is provided at a position where the arm switch units 530 can be cooled, it is not necessary to arrange the multiple arm switch units 530 along the unit inner wall surface 105a so as to be cooled by the external air Fo. Accordingly, a degree of freedom in layout of the heat generation components such as the arm switch units 530 can be improved.

According to the present embodiment, in the internal passage 855, the refrigerant RF flows through the motor passage 856 after flowing through the inverter passage 857. In the configuration, the refrigerant RF can cool the inverter device 80 in a state where the heat of the motor device 60 is not applied to the refrigerant RF. Therefore, the cooling effect of the refrigerant RF on the inverter device 80 can be enhanced.

In the EPU 50, the motor device 60 tends to have a higher temperature than the inverter device 80. Meanwhile, in the present embodiment, the inverter device 80 can be cooled by the refrigerant RF that is not heated by the motor device 60. At the same time, the motor device 60 can be cooled by the refrigerant RF that is not heated to that extent. In this way, both the motor device 60 and the inverter device 80 can be efficiently cooled, and a circulation flow rate of the refrigerant RF can be reduced. Accordingly, the refrigerant RF and the refrigerant pump 801 can be reduced in weight, and the output density of the EPU 50 can be improved.

According to the present embodiment, the radiator fins 851 support the radiator pipe 852 to dissipate the heat of the refrigerant RF flowing through the radiator passage 853. In the configuration, the position of the radiator passage 853 can be maintained using the radiator fins 851. Moreover, the radiator passage 853 is provided at a position separated outward from the unit outer surface 101os. In the configuration, it is not necessary to build the radiator passage 853 in the unit housing 101 such as the unit outer peripheral wall 105. Therefore, a degree of freedom in design of the unit housing 101 can be increased. Accordingly, the unit housing 101 capable of improving the output density of the EPU 50 can be adopted.

According to the present embodiment, in the radial direction RD, the inner peripheral fins 851a are provided on the inner side of the radiator pipe 852, and the outer peripheral fins 851b are provided on the outer side of the radiator pipe 852. In the configuration, the inner peripheral fins 851a and the outer peripheral fins 851b can be disposed to surround the radiator pipe 852. Therefore, the heat of the refrigerant RF flowing through the radiator pipe 852 is easily dissipated from the inner peripheral fins 851a and the outer peripheral fins 851b. For example, the heat can be dissipated in all directions from the radiator pipe 852 in a direction orthogonal to the circumferential direction CD by the inner peripheral fins 851a and the outer peripheral fins 851b. Accordingly, the effect of cooling the EPU 50 can be enhanced by the inner peripheral fins 851a and the outer peripheral fins 851b.

The radiator fins 851 may include only one of the inner peripheral fins 851a and the outer peripheral fins 851b. That is, the radiator fins 851 may include at least one of the inner peripheral fins 851a and the outer peripheral fins 851b. Multiple radiators 850 may be arranged in the circumferential direction CD. In the configuration, the radiator passages 853 of the multiple radiators 850 are preferably connected to each other.

### <Thirteenth Embodiment>

In the twelfth embodiment described above, the EPU 50 includes the radiator 850. Meanwhile, in a thirteenth embodiment, the EPU 50 includes the common passage. Configurations, operations, and effects not particularly described in the thirteenth embodiment are the same as those of the twelfth embodiment. In the thirteenth embodiment, differences from the twelfth embodiment will be mainly described.

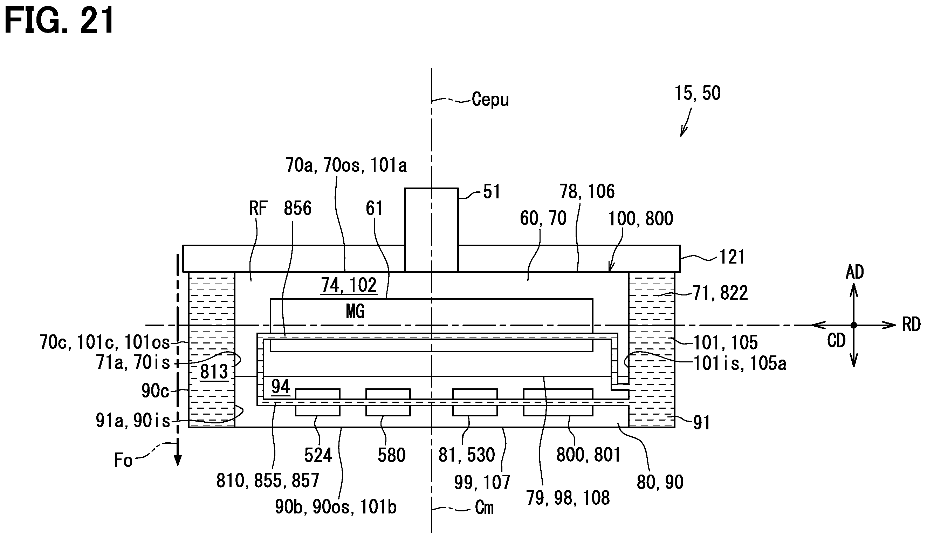

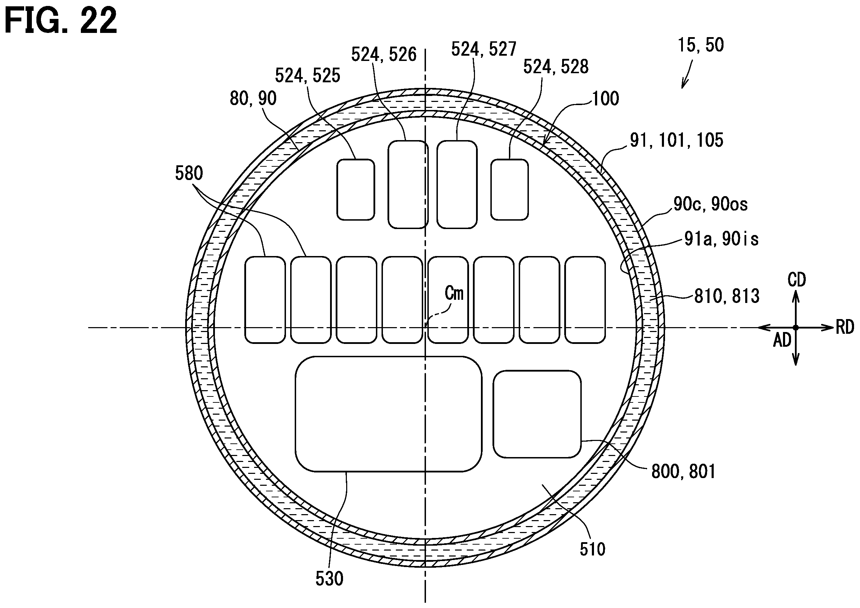

As shown in FIGS. 21 and 22, the EPU 50 includes the common outer peripheral passage 813 as the common passage, as in the seventh embodiment. Meanwhile, the EPU 50 does not include the radiator 850. The refrigerant passage 810 includes the common outer peripheral passage 813 and the internal passage 855. In the refrigerant passage 810, the common outer peripheral passage 813 and the internal passage 855 are connected to each other. In the refrigerant passage 810, the refrigerant RF circulates to flow through both the common outer peripheral passage 813 and the internal passage 855. In the EPU 50, the motor unit 100 is cooled from both the outer side and the inner side by the refrigerant RF flowing through the common outer peripheral passage 813 and the internal passage 855.

In the present embodiment, unlike the seventh embodiment, the EPU 50 does not include the liquid cooling fins 835. That is, the liquid cooling fins 835 are not provided on the unit liquid-cooling portion 821 including the common outer peripheral passage 813. In the configuration, the heat of the refrigerant RF flowing through the common outer peripheral passage 813 is also dissipated to the outside at the unit liquid-cooling portion 821.

### <Fourteenth Embodiment>

In the first embodiment described above, the blower fan 121 is provided on the upwind side of the external air Fo with respect to the motor unit 100. Meanwhile, in a fourteenth embodiment, the blower fan 121 is provided on the downwind side of the external air Fo with respect to the motor unit 100. Configurations, operations, and effects not particularly described in the fourteenth embodiment are the same as those in the first embodiment. In the fourteenth embodiment, differences from the first embodiment will be mainly described.

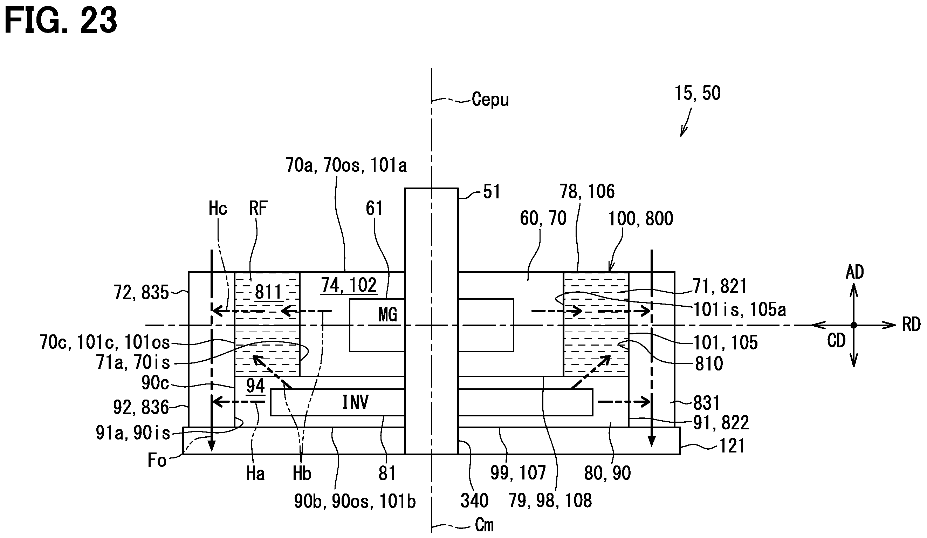

As shown in FIG. 23, the blower fan 121 is provided only on the downwind side of the external air Fo with respect to the motor unit 100. The blower fan 121 is provided on a side opposite to the propeller 20 with the motor unit 100 interposed therebetween in the axial direction AD. The blower fan 121 blows air toward a side opposite to the motor unit 100. In the present embodiment, the external air Fo flows in the axial direction AD when the external air Fo is sucked by the blower fan 121 on the downwind side. The blower fan 121 on the downwind side may be referred to as a suction fan. The blower fan 121 is not provided on the upwind side of the external air Fo with respect to the motor unit 100.

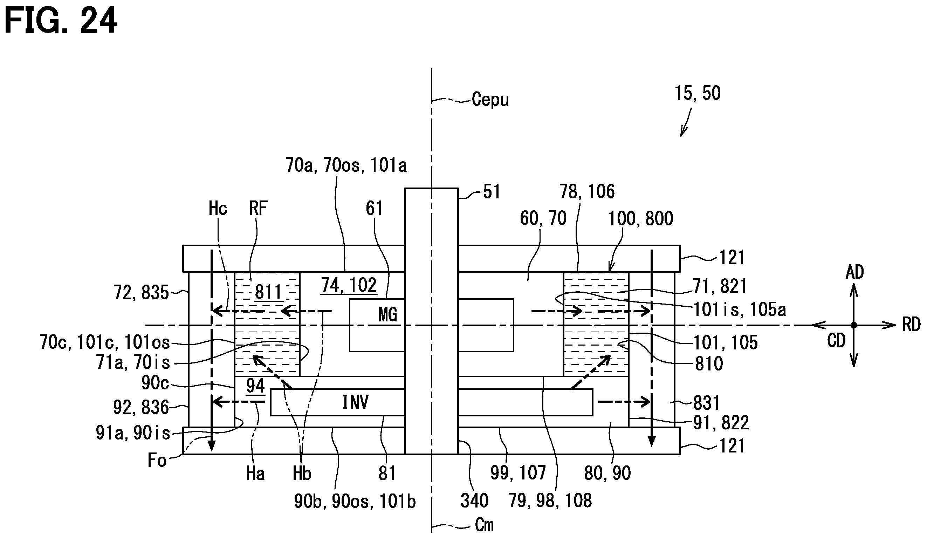

As shown in FIG. 24, the blower fan 121 may be provided on the upwind side of the external air Fo with respect to the motor unit 100 in addition to the downwind side. In the configuration, the two blower fans 121 are arranged in the axial direction AD with the motor unit 100 interposed therebetween. Of the two blower fans 121, the blower fan 121 on the upwind side blows air toward the motor unit 100, as in the first embodiment. On the other hand, the blower fan 121 on the downwind side blows air toward the side opposite to the motor unit 100, as the blower fan 121 shown in FIG. 23.

### <Fifteenth Embodiment>

In the first embodiment described above, the multiple arm switch units 530 are arranged in the radial direction RD. Meanwhile, in a fifteenth embodiment, the multiple arm switch units 530 are arranged in the circumferential direction CD. Configurations, operations, and effects not particularly described in the fifteenth embodiment are the same as those of the first embodiment. In the fifteenth embodiment, differences from the first embodiment will be mainly described.

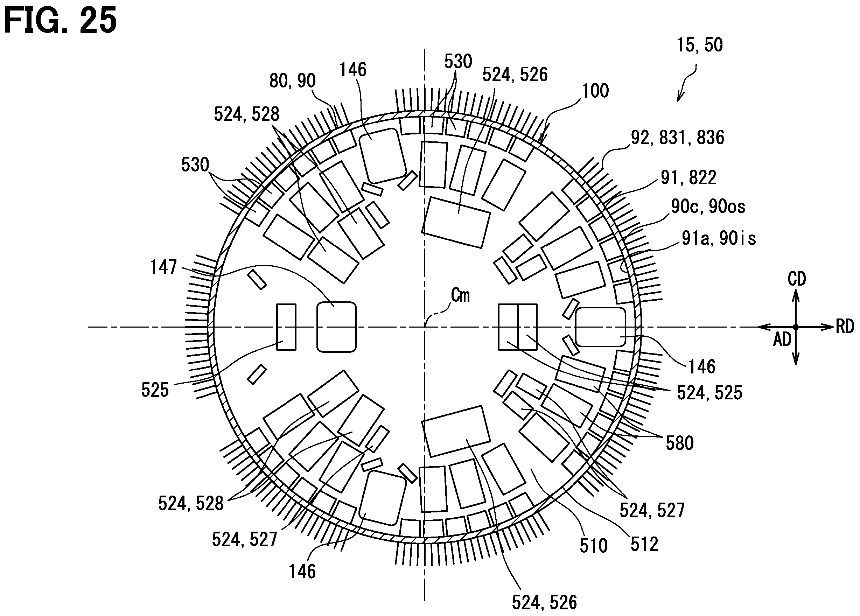

As shown in FIG. 25, the multiple arm switch units 530 are arranged in the circumferential direction CD along the drive board outer peripheral end 512. The arm switch units 530 are provided on the inverter inner wall surface 91a. The arm switch units 530 are provided on the inverter inner wall surface 91a such that the heat of the arm switch units 530 is transferred to the inverter outer peripheral wall 91. The arm switch unit 530 and the inverter outer peripheral wall 91 directly exchange heat. For example, the arm switch unit 530 is in contact with the inverter inner wall surface 91a. The arm switch unit 530 is fixed to the inverter outer peripheral wall 91 by a fixture such as a screw.

As long as the heat of the arm switch unit 530 is transmitted to the inverter outer peripheral wall 91, the arm switch unit 530 and the inverter inner wall surface 91a may not be in contact with each other. For example, a heat transfer member such as heat transfer gel may be provided between the arm switch unit 530 and the inverter inner wall surface 91a.

The arm switch unit 530 includes a diode 87 in addition to the arm switch 86. In the arm switch unit 530, an element forming the diode 87 is protected by the protective portion.

In the inverter device 80, the smoothing capacitor unit 580 is provided at a position away from the arm switch unit 530 toward the radially inner side. The smoothing capacitor unit 580 is located at a position away from the drive board outer peripheral end 512 toward the radially inner side. Multiple smoothing capacitor units 580 are arranged in the circumferential direction CD along the drive board outer peripheral end 512. The smoothing capacitor unit 580 is formed in a rectangular parallelepiped shape as a whole so as to extend in the radial direction RD. In the smoothing capacitor unit 580, a long side portion extends in the radial direction RD, and a short side portion extends in the circumferential direction CD.

Similar to the smoothing capacitor unit 580, each of the filter components 524 is provided at a position away from the arm switch unit 530 toward the radially inner side. The filter component 524 is located at a position away from the smoothing capacitor unit 580 toward the radially inner side. Similar to the smoothing capacitor unit 580, the filter components 524 are arranged in the circumferential direction CD. Each of at least a part of the filter components 524 is formed in a rectangular parallelepiped shape as a whole so as to extend in the radial direction RD. In each of the at least part of the filter components 524, a long side portion extends in the radial direction RD and a short side portion extends in the circumferential direction CD.

In the multiple filter components 524, multiple Y capacitor units 527 and multiple X capacitor units 528 are arranged in the circumferential direction CD. Each of the Y capacitor unit 527 and the X capacitor unit 528 is formed in a rectangular parallelepiped shape as a whole so as to extend in the radial direction RD. In each of the Y capacitor unit 527 and the X capacitor unit 528, a long side portion extends in the radial direction RD, and a short side portion extends in the circumferential direction CD.

In the inverter device 80, heat is more likely to be generated at locations closer to the radially outer side. The arm switch unit 530, the smoothing capacitor unit 580, and the filter component 524 are heat generation components that generate heat when energized. In the inverter device 80, a component that is more likely to generate heat when energized is provided closer to the radially outer side. The arm switch unit 530 is more likely to generate heat than the smoothing capacitor unit 580 and the filter component 524. Therefore, the arm switch unit 530 is provided on the radially outer side with respect to both the smoothing capacitor unit 580 and the filter component 524. For example, the arm switch unit 530 generates a larger amount of heat than both the smoothing capacitor unit 580 and the filter component 524, and is likely to have a high temperature.

The filter component 524 is less likely to generate heat than both the arm switch unit 530 and the smoothing capacitor unit 580. Therefore, the filter component 524 is provided on the radially inner side with respect to both the arm switch unit 530 and the smoothing capacitor unit 580. For example, the filter component 524 is less likely to have a higher temperature than both the arm switch unit 530 and the smoothing capacitor unit 580.

In the multiple filter components 524, the X capacitor unit 528 and the Y capacitor unit 527 are located on the radially inner side with respect to the smoothing capacitor unit 580. The X capacitor unit 528, the Y capacitor unit 527, and the smoothing capacitor unit 580 are located on the radially inner side with respect to the arm switch unit 530. Similar to the smoothing capacitor unit 580, the X capacitor unit 528 and the Y capacitor unit 527 are less likely to generate heat than the arm switch unit 530. The arm switch unit 530 corresponds to a switch component. Each of the smoothing capacitor unit 580, the X capacitor unit 528, and the Y capacitor unit 527 corresponds to a capacitor component.

According to the present embodiment, the arm switch unit 530 is provided between the smoothing capacitor unit 580 and the inverter inner wall surface 91a and between the filter component 524 and the inverter inner wall surface 91a in the radial direction RD. In the configuration, since the arm switch unit 530 is located at a position close to the inverter outer peripheral wall 91, heat of the arm switch unit 530 is easily dissipated to the outside from the inverter outer peripheral wall 91. In the configuration, the smoothing capacitor unit 580 and the filter component 524 are not present in a path through which the heat of the arm switch unit 530 is transferred to the inverter inner wall surface 91a. Therefore, the heat of the arm switch unit 530 can be prevented from being accumulated in the smoothing capacitor unit 580 and the filter component 524 before being dissipated to the outside from the inverter outer peripheral wall 91. Accordingly, the heat dissipation effect of the arm switch unit 530, the smoothing capacitor unit 580, and the filter component 524 can be enhanced by a positional relationship among the arm switch unit 530, the smoothing capacitor unit 580, and the filter component 524.

According to the present embodiment, the arm switch unit 530 is provided on the inverter inner wall surface 91a such that the heat of the arm switch unit 530 is transferred to the inverter inner wall surface 91a. In the configuration, the heat of the arm switch unit 530 is easily dissipated to the outside through the inverter outer peripheral wall 91. Therefore, an effect of cooling the arm switch unit 530 can be enhanced.

In the present embodiment, the common passage may be provided in the inverter outer peripheral wall 91, as the inverter outer peripheral passage 812 of the fourth embodiment or the common outer peripheral passage 813 of the seventh embodiment. In the configuration, since the arm switch unit 530 is provided at a position close to the common passage, the effect of cooling the arm switch unit 530 by the refrigerant RF flowing through the common passage can be enhanced.

### <Other Embodiments>

The disclosure in the present description is not limited to the illustrated embodiments. The disclosure encompasses the illustrated embodiments and modifications thereof made by those skilled in the art. For example, the disclosure is not limited to the combination of components and elements described in the embodiments, and various modifications and implementations can be performed. The disclosure may be implemented in various combinations. The disclosure may have an additional portion that can be added to the embodiments. The disclosure encompasses the omission of components and elements of the embodiments. The disclosure encompasses the replacement or combination of components, elements between one embodiment and another embodiment. The disclosed technical scope is not limited to those described in the embodiments. The disclosed technical scope is indicated by the description of the claims, and should be construed to include all changes within the meaning and range equivalent to the description of the claims.

In each of the embodiments described above, the refrigerant passage 810 may have any configuration as long as both the motor device 60 and the inverter device 80 are cooled by the refrigerant passage 810. For example, the refrigerant passage 810 may include all or at least one of the motor outer peripheral passage 811, the inverter outer peripheral passage 812, and the common outer peripheral passage 813.

In the refrigerant passage 810, the internal passage 855 may be provided in any manner. For example, instead of providing, in the unit space 102, the passage forming portion forming the internal passage 855, the unit space 102 itself may be the internal passage 855. That is, the unit inner surface 101is may form the internal passage 855. In the configuration, the refrigerant RF directly flows into the unit space 102. In the unit space 102, the motor 61 and the inverter 81 may be immersed in the refrigerant RF. For example, in the motor device 60, the motor coil 211 may be immersed in the refrigerant RF. In the inverter device 80, the arm switch unit 530, a bus bar, a power card, a capacitor, and the like may be immersed in the refrigerant RF.

In each of the embodiments described above, the EPU 50 may not include the heat dissipation fins such as the outer peripheral walls 831. For example, as in the thirteenth embodiment described above, the liquid cooling fins 835 may not be provided for the unit liquid-cooling portions 821. Even if the EPU 50 does not include the liquid cooling fins 835, the motor device 60 and the inverter device 80 can be cooled by the refrigerant RF flowing through the unit liquid-cooling portion 821.

In each of the embodiments described above, as long as the inside of the unit housing 101 is cooled, the refrigerant passage 810 may cool at least one of the motor device 60 and the inverter device 80. For example, the refrigerant passage 810 may cool only one of the motor device 60 and the inverter device 80. In the refrigerant passage 810, the internal passage 855 may be provided in only one of the motor space 74 and the inverter device 80.

In each of the embodiments described above, at least one of the motor 61 and the inverter 81 may be accommodated in an accommodating housing such as the unit housing 101. For example, the unit housing 101 may accommodate only one of the motor 61 and the inverter 81.

In each of the embodiments described above, the internal passage 855 may cool at least one of the motor device 60 and the inverter device 80. For example, the internal passage 855 may be provided to cool the motor device 60 and the inverter device 80 together. The internal passage 855 may be provided to cool the inverter device 80 after cooling the motor device 60.

In each of the embodiments described above, components such as the smoothing capacitor unit 580 and the arm switch unit 530 may be arranged in any manner inside the inverter housing 90. For example, the multiple arm switch units 530 may be arranged in the radial direction RD as in the first embodiment, or may be arranged in the circumferential direction CD as in the fifteenth embodiment. Each of the arm switch units 530, the smoothing capacitor units 580, and the filter components 524 may be arranged in the circumferential direction CD.

In each of the embodiments described above, the motor 61 may not be a dual-rotor motor. For example, the motor 61 may be a single-rotor motor including one rotor. The motor 61 may not be an axial gap-type motor. For example, the motor 61 may be a radial gap-type motor. In the motor 61, for example, the stator is provided on the radially outer side with respect to the rotor.

In each of the embodiments described above, the refrigerant pump 801 may not be an electric pump. For example, the refrigerant pump 801 may be a mechanical pump such as a centrifugal pump. In the configuration, the refrigerant pump 801 causes the refrigerant RF to flow as the motor 61 is driven. The coolant pump 801 is provided, for example, on the motor shaft 340.

In each of the embodiments described above, the blower fan 121 may not be a mechanical fan. For example, the blower fan 121 may be an electric fan including an electric motor. In the configuration, the blower fan 121 is driven by electric power supplied from the battery 31 or the like. The blower fan 121 can blow air regardless of a driving state of the motor 61.

In each of the embodiments described above, the EPU 50 may not include the blower fan 121. In the configuration, the propeller wind can be used as the external air Fo to cool the EPU 50.

In each of the embodiments described above, in the unit housing 101, the unit space 102 may not be partitioned into the motor space 74 and the inverter space 94. That is, the motor space 74 and the inverter space 94 may be a continuous space. For example, in the first embodiment, the unit housing 101 may not include the partition plate 108.

In each of the embodiments described above, the eVTOL 10 may be configured such that at least one propeller 20 is driven by at least one EPU 50. For example, one propeller 20 may be driven by multiple EPUs 50, or multiple propellers 20 may be driven by one EPU 50.

In each of the embodiments described above, the eVTOL 10 may not be a tilt-rotor aircraft. For example, in the eVTOL 10, the multiple propellers 20 may include a lift-propeller 20 and a cruise-propeller 20. In the eVTOL 10, for example, the lift-propeller 20 is driven when ascending, and the cruise-propeller 20 is driven when moving forward.

In each of the embodiments described above, the flight vehicle on which the EPU 50 is mounted may not be the vertical take-off and landing aircraft as long as being of an electric type. For example, the flight vehicle may be a flight vehicle capable of taking off and landing while gliding, as an example of the electric aircraft. The flight vehicle may be a rotorcraft, or a fixed-wing aircraft. The flight vehicle may be an unmanned flight vehicle carrying no person.

In each of the embodiments described above, the moving object on which the EPU 50 is mounted may not be a flight vehicle as long as the moving object is movable by rotation of the rotary body. For example, the moving object may be a vehicle, a ship, a construction machine, or an agricultural machine. For example, when the moving object is a vehicle, a construction machine, or the like, the rotary body is a movement-wheel or the like, and an output shaft portion is an axle or the like. When the moving object is a ship, the rotary body is a propulsion-screw propeller or the like, and the output shaft portion is a propeller shaft or the like.

### (Disclosure of Technical Ideas)

This description discloses multiple technical ideas described in multiple items listed below. Some items may be written in a multiple dependent form with subsequent items referring to the preceding item as an alternative. Some items may be written in a multiple dependent form referring to another multiple dependent form. These items written in a multiple dependent form define multiple technical ideas.

### (Technical Idea A1)

A drive device (50) is to be driven by electric power. The drive device comprises: a motor device (60) including a motor (61) configured to be supplied with electric power; an inverter device (80) including an inverter (81) configured to convert the electric power to be supplied to the motor; an accommodating housing (101) accommodating the motor and the inverter; and a cooling device (800) including a refrigerant passage (810), which is configured to allow a refrigerant (RF) to circulate therethrough, and a refrigerant pump (801), which is configured to cause the refrigerant to flow through the refrigerant passage. The cooling device is configured to cool both the motor device and the inverter device with the refrigerant which flows through the refrigerant passage.

### (Technical Idea A2)

The drive device according to Technical Idea A1. The refrigerant passage includes a common passage (811, 812, 813, 814, 815), which extends in a circumferential direction (CD) of a rotation axis (Cm) of the motor and is arranged on both the motor device and the inverter device in a direction (AD, RD) orthogonal to the circumferential direction, such that the refrigerant cools both the motor device and the inverter device.

### (Technical Idea A3)

The drive device according to Technical Idea A2. The refrigerant passage includes, as the common passage, a motor outer peripheral passage (811) arranged on the inverter device in an axial direction (AD) of the rotation axis and provided on an outer peripheral side of the motor device.

### (Technical Idea A4)

The drive device according to Technical Idea A2 or A3. The refrigerant passage includes, as the common passage, an inverter outer peripheral passage (812) arranged on the motor device in the axial direction (AD) of the rotation axis and provided on an outer peripheral side of the inverter device.

### (Technical Idea A5)

The drive device according to any one of Technical Ideas A2 to A4. The refrigerant passage includes, as the common passage, a common outer peripheral passage (813) extending to span the motor device and the inverter device in an axial direction (AD) of the rotation axis and provided on an outer peripheral side of each of the motor device and the inverter device.

### (Technical Idea A6)

The drive device according to any one of Technical Ideas A2 to A5. The refrigerant passage includes, as the common passage, a radially interposed passage (815) provided between the motor device and the inverter device in a radial direction (RD) of the rotation axis.

### (Technical Idea A7)

The drive device according to any one of Technical Ideas A1 to A6. The refrigerant passage includes an internal passage (855, 856, 857) provided to allow the refrigerant to flow inside the accommodating housing.

### (Technical Idea A8)

The drive device according to Technical Idea A7. The internal passage includes a motor passage (856), which is to cool the motor device, and an inverter passage (857), which is to cool the inverter device, and is provided to allow the refrigerant to flow through the motor passage after flowing through the inverter passage.

### (Technical Idea A9)

The drive device according to any one of Technical Ideas A1 to A8. The motor device includes a motor shaft (340) configured to rotate, as the motor is driven, a bearing portion (361) that rotatably supports the motor shaft, and a bearing support portion (108) that supports the bearing portion. The refrigerant passage includes a support-portion cooling passage (814) configured to cool the bearing support portion.

### (Technical Idea A10)

The drive device according to any one of Technical Ideas A1 to A9. The refrigerant passage includes a coil cooling passage (811, 813, 815, 816, 856) configured to cool a coil (211) of the motor.

### (Technical Idea A11)

The drive device according to any one of Technical Ideas A1 to A10, further comprises: an inverter device (80) including the inverter and an inverter housing (90), which is included in the accommodating housing and accommodating the inverter. The inverter device includes a switch component (530) configured to convert the electric power, and a capacitor component (527, 528, 580) electrically connected to the switch component, and the switch component is provided between the capacitor component and an inner wall surface (91a) of the inverter housing in a radial direction (RD) of a rotation axis (Cm) of the motor.

### (Technical Idea A12)

The drive device according to Technical Idea A11. The switch component is provided on the inner wall surface to allow heat of the switch component to be transferred to the inner wall surface.

### (Technical Idea A13)

The drive device according to any one of Technical Ideas A1 to A12, further comprises: a refrigerant fin (835, 851) provided on an outer surface (101os) of the accommodating housing and configured to dissipate heat of the refrigerant.

### (Technical Idea A14)

The drive device according to Technical Idea A13, further comprises: a blower fan (121) provided to the accommodating housing and configured to blow air to cause a gas (Fo) to flow along the refrigerant fin.

### (Technical Idea A15)

The drive device according to any one of Technical Ideas A1 to A14. The drive device is provided in a flight vehicle (10) and to be driven by electric power to cause the flight vehicle to fly.

### (Technical Idea B1)

A drive device (50) is to be driven by electric power. The drive device comprises: a motor device (60) including a motor (61) configured to be supplied with electric power; an inverter device (80) including an inverter (81) configured to convert the electric power to be supplied to the motor; an accommodating housing (101) accommodating at least one of the motor and the inverter; a cooling device (800) including a refrigerant passage (810), which is configured to allow a refrigerant (RF) to circulate therethrough, and a refrigerant pump (801), which is configured to cause the refrigerant to flow through the refrigerant passage, the cooling device configured to cool an inside of the accommodating housing with the refrigerant which flows through the refrigerant passage; and a refrigerant fin (835, 851) provided on an accommodating housing outer surface (101os), which is an outer surface of the accommodating housing, and configured to dissipate heat of the refrigerant.

### (Technical Idea B2)

The drive device according to Technical Idea B1. The refrigerant passage includes an outer surface passage (811, 812, 813, 816, 853) extending along the accommodating housing outer surface to allow the refrigerant to flow along the accommodating housing outer surface, and a plurality of refrigerant fins are arranged along the outer surface passage to dissipate heat of the refrigerant flowing through the outer surface passage.

### (Technical Idea B3)

The drive device according to Technical Idea B2, further comprises: a passage built-in portion (821) included in the accommodating housing and in which a built-in passage (811, 812, 813, 816) built in the accommodating housing is formed as the outer surface passage; and an outer fin (835) provided, as the refrigerant fin, outside the passage built-in portion.

### (Technical Idea B4)

The drive device according to Technical Idea B2 or B3, further comprises: a separation pipe portion (852), in which a separation passage (853) separated outward from the accommodating housing outer surface, is formed as the outer surface passage; and a support fin (851), as the refrigerant fin, supporting the separation pipe portion and configured to dissipate heat of the refrigerant flowing through the separation passage.

### (Technical Idea B5)

The drive device according to Technical Idea B4. The support fin includes an inner peripheral fin (851a) provided on an inner side of the separation pipe portion in a radial direction (RD) of a rotation axis (Cm) of the motor, and an outer peripheral fin (851b) provided on an outer side of the separation pipe portion in the radial direction.

### (Technical Idea B6)

The drive device according to any one of Technical Ideas B1 to B5, further comprises: a housing fin (836) aligned with the refrigerant fin along the accommodating housing outer surface and configured to dissipate heat of the accommodating housing.

### (Technical Idea B7)

The drive device according to Technical Idea B6. The refrigerant fin and the housing fin are arranged along the accommodating housing outer surface in an axial direction (AD) in which a rotation axis (Cm) of the motor extends.

### (Technical Idea B8)

The drive device is according to any one of Technical Ideas B1 to B7. The refrigerant passage includes an internal passage (855, 856, 857) provided to allow the refrigerant to flow inside the accommodating housing.

### (Technical Idea B9)

The drive device according to Technical Idea B8. The internal passage includes a motor passage (856), which is to cool the motor device, and an inverter passage (857), which is to cool the inverter device, and is provided to allow the refrigerant to flow through the motor passage after flowing through the inverter passage.

### (Technical Idea B10)

The drive device according to any one of Technical Ideas B1 to B9. The motor device includes a motor shaft (340) configured to rotate, as the motor is driven, a bearing portion (361) that rotatably supports the motor shaft, and a bearing support portion (108) that supports the bearing portion. The refrigerant passage includes a support-portion cooling passage (814) configured to cool the bearing support portion.

### (Technical Idea B11)

The drive device according to any one of Technical Ideas B1 to B10. The refrigerant passage includes a coil cooling passage (811, 813, 815, 816, 856) configured to cool a coil (211) of the motor.

### (Technical Idea B12)

The drive device according to any one of Technical Ideas B1 to B10, further comprises: an inverter device (80) including the inverter and an inverter housing (90), which is included in the accommodating housing and accommodating the inverter. The inverter device includes a switch component (530) configured to convert the electric power, and a capacitor component (527, 528, 580) electrically connected to the switch component, and the switch component is provided between the capacitor component and an inner wall surface (91a) of the inverter housing in a radial direction (RD) of a rotation axis (Cm) of the motor.

### (Technical Idea B13)

The drive device according to Technical Idea B12. The switch component is provided on the inner wall surface to allow heat of the switch component to be transferred to the inner wall surface (91a) of the inverter housing.

### (Technical Idea B14)

The drive device according to any one of Technical Ideas B1 to B13, further comprises: a blower fan (121) provided to the accommodating housing and configured to blow air to cause a gas (Fo) to flow along the refrigerant fin.

### (Technical Idea B15)

The drive device according to any one of Technical ideas B1 to B14. The drive device is provided in a flight vehicle (10) and to be driven by electric power to cause the flight vehicle to fly.

## Claims

1. A drive device (50) to be driven by electric power, the drive device comprising:
a motor device (60) including a motor (61) configured to be supplied with electric power;
an inverter device (80) including an inverter (81) configured to convert the electric power to be supplied to the motor;
an accommodating housing (101) accommodating the motor and the inverter; and
a cooling device (800) including a refrigerant passage (810), which is configured to allow a refrigerant (RF) to circulate therethrough, and a refrigerant pump (801), which is configured to cause the refrigerant to flow through the refrigerant passage, wherein
the cooling device is configured to cool both the motor device and the inverter device with the refrigerant which flows through the refrigerant passage.

2. The drive device according to claim 1, wherein
the refrigerant passage includes a common passage (811, 812, 813, 814, 815), which extends in a circumferential direction (CD) of a rotation axis (Cm) of the motor and is arranged on both the motor device and the inverter device in a direction (AD, RD) orthogonal to the circumferential direction, such that the refrigerant cools both the motor device and the inverter device.

3. The drive device according to claim 2, wherein
the refrigerant passage includes, as the common passage, a motor outer peripheral passage (811) arranged on the inverter device in an axial direction (AD) of the rotation axis and provided on an outer peripheral side of the motor device.

4. The drive device according to claim 2 or 3, wherein
the refrigerant passage includes, as the common passage, an inverter outer peripheral passage (812) arranged on the motor device in an axial direction (AD) of the rotation axis and provided on an outer peripheral side of the inverter device.

5. The drive device according to claim 2 or 3, wherein
the refrigerant passage includes, as the common passage, a common outer peripheral passage (813) extending to span the motor device and the inverter device in an axial direction (AD) of the rotation axis and provided on an outer peripheral side of each of the motor device and the inverter device.

6. The drive device according to claim 2 or 3, wherein
the refrigerant passage includes, as the common passage, a radially interposed passage (815) provided between the motor device and the inverter device in a radial direction (RD) of the rotation axis.

7. The drive device according to any one of claims 1 to 3, wherein
the refrigerant passage includes an internal passage (855, 856, 857) provided to allow the refrigerant to flow inside the accommodating housing.

8. The drive device according to claim 7, wherein
the internal passage includes a motor passage (856), which is to cool the motor device, and an inverter passage (857), which is to cool the inverter device, and is provided to allow the refrigerant to flow through the motor passage after flowing through the inverter passage.

9. The drive device according to any one of claims 1 to 3, wherein
the motor device includes
a motor shaft (340) configured to rotate, as the motor is driven,
a bearing portion (361) that rotatably supports the motor shaft, and
a bearing support portion (108) that supports the bearing portion, and
the refrigerant passage includes a support-portion cooling passage (814) configured to cool the bearing support portion.

10. The drive device according to any one of claims 1 to 3, wherein
the refrigerant passage includes a coil cooling passage (811, 813, 815, 816, 856) configured to cool a coil (211) of the motor.

11. The drive device according to any one of claims 1 to 3, further comprising:
an inverter device (80) including the inverter and an inverter housing (90), which is included in the accommodating housing and accommodating the inverter, wherein
the inverter device includes
a switch component (530) configured to convert the electric power, and
a capacitor component (527, 528, 580) electrically connected to the switch component, and
the switch component is provided between the capacitor component and an inner wall surface (91a) of the inverter housing in a radial direction (RD) of a rotation axis (Cm) of the motor.

12. The drive device according to claim 11, wherein
the switch component is provided on the inner wall surface to allow heat of the switch component to be transferred to the inner wall surface.

13. The drive device according to any one of claims 1 to 3, further comprising:
a refrigerant fin (835, 851) provided on an outer surface (101os) of the accommodating housing and configured to dissipate heat of the refrigerant.

14. The drive device according to claim 13, further comprising:
a blower fan (121) provided to the accommodating housing and configured to blow air to cause a gas (Fo) to flow along the refrigerant fin.

15. The drive device according to any one of claims 1 to 3, wherein
the drive device is provided in a flight vehicle (10) and to be driven by electric power to cause the flight vehicle to fly.
